# EUROPEAN PATENT APPLICATION

(11) **EP 4 329 398 A1**
(43) Date of publication of application: **28.02.2024**
(21) Application number: 22790965.2
(22) Date of filing: 15.04.2022
(51) Int. Cl.: H04W 68/12

(54) **INFORMATION PROCESSING METHOD AND APPARATUS, AND TERMINAL AND STORAGE MEDIUM**

(30) Priority: 21.04.2021 CN 202110432902; 29.04.2021 CN 202110476908
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Lavoix
(86) International application number: PCT/CN2022/087063
(87) International publication number: WO 2022/222857

(57) **Abstract**

An information processing method and apparatus, a terminal, and a storage medium are disclosed, where the information processing method includes: receiving, by an access stratum AS of a terminal, a paging message about the terminal from a first network; and performing, by the AS of the terminal, a first operation, where the first operation includes at least one of the following: determining paging cause information related to the terminal; and sending first information to a non-access stratum NAS of the terminal, where the first information includes at least one of the following: the paging message; paging cause information; information about the terminal in the paging message; first indication information, where the first indication information is used to indicate that the paging message is received; and type information of the paging message.

## Description

### CROSS-REFERENCE TO RELATED APPLICATIONS

This application claims priority to Chinese Patent Application No. 202110432902.2, filed on April 21, 2021 and entitled "INFORMATION PROCESSING METHOD AND APPARATUS, TERMINAL, AND STORAGE MEDIUM", and to Chinese Patent Application No. 202110476908.X, filed on April 29, 2021 and entitled "INFORMATION PROCESSING METHOD AND APPARATUS, TERMINAL, AND STORAGE MEDIUM", which are incorporated herein by reference in their entireties.

### TECHNICAL FIELD

This application pertains to the field of communication technologies, and specifically relates to an information processing method and apparatus, a terminal, and a storage medium.

### BACKGROUND

For a multiple subscriber identity module (Multiple Subscriber Identity Module, MUSIM) terminal that has only a single-transmit dual-receive or a single-transmit single-receive function, because the terminal cannot interact with a plurality of networks at the same time, when services and/or data related to the plurality of networks exist, the terminal needs to determine to switch between different networks based on a paging initiation cause. A problem of how to determine paging rejection further needs to be resolved. A problem of how to perform paging rejection needs to be resolved.

### SUMMARY

Embodiments of this application provide an information processing method and apparatus, a terminal, and a storage medium, to resolve a problem of paging rejection.

According to a first aspect, an information processing method is provided, and the method includes:
receiving, by an access stratum AS of a terminal, a paging message about the terminal from a first network; and
performing, by the AS of the terminal, a first operation, where
the first operation includes at least one of the following:
   determining paging cause information related to the terminal; and
   sending first information to a non-access stratum NAS of the terminal, where
   the first information includes at least one of the following:
      the paging message;
      paging cause information;
      information about the terminal in the paging message;
      first indication information, where the first indication information is used to indicate that the paging message is received; and
      type information of the paging message.

According to a second aspect, an information processing method is provided, and the method includes:
receiving, by an access stratum AS of a terminal, a paging message about the terminal from a first network; and
performing, by the AS of the terminal, a third operation, where
the third operation includes at least one of the following:
   determining whether to perform paging rejection;
   determining whether to perform a paging acceptance response;
   determining whether to send information used for paging rejection to the first network;
   determining whether to send information used for a paging acceptance response to the first network;
   sending the information used for paging rejection to the first network; and
   sending the information used for a paging acceptance response to the first network.

According to a third aspect, an information processing method is provided, and the method includes:
receiving a paging message from a first network; and
performing a fourth operation based on the paging message, where
the fourth operation includes at least one of the following:
   determining whether to perform paging rejection;
   determining whether to perform a paging acceptance response;
   determining whether to initiate paging rejection through AS signaling;
   determining whether to initiate paging rejection through NAS signaling;
   sending, through AS signaling, information used for paging rejection or sending, through NAS signaling, information used for paging rejection; and
   sending, through AS signaling, information used for a paging acceptance response or sending, through NAS signaling, information used for a paging acceptance response.

According to a fourth aspect, an information processing apparatus is provided, and the apparatus includes:
a first receiving unit, configured to receive a paging message about a terminal from a first network; and
a first execution unit, configured to perform a first operation, where
the first operation includes at least one of the following:
   determining paging cause information related to the terminal; and
   sending first information to a non-access stratum NAS of the terminal, where
   where
   the first information includes at least one of the following:
      the paging message;
      paging cause information;
      information about the terminal in the paging message;
      first indication information, where the first indication information is used to indicate that the paging message is received; and
      type information of the paging message.

According to a fifth aspect, an information processing apparatus is provided, and the apparatus includes:
a second receiving unit, configured to receive a paging message about a terminal from a first network; and
a third execution unit, configured to perform a third operation, where
the third operation includes at least one of the following:
   determining whether to perform paging rejection;
   determining whether to perform a paging acceptance response;
   determining whether to send information used for paging rejection to the first network;
   determining whether to send information used for a paging acceptance response to the first network;
   sending the information used for paging rejection to the first network; and
   sending the information used for a paging acceptance response to the first network.

According to a sixth aspect, an information processing apparatus is provided, and the apparatus includes:
a third receiving unit, configured to receive a paging message from a first network; and
a fourth execution unit, configured to perform a fourth operation based on the paging message, where the fourth operation includes at least one of the following:
   determining whether to perform paging rejection;
   determining whether to perform a paging acceptance response;
   determining whether to initiate paging rejection through AS signaling;
   determining whether to initiate paging rejection through NAS signaling;
   sending, through AS signaling, information used for paging rejection or sending, through NAS signaling, information used for paging rejection; and
   sending, through AS signaling, information used for a paging acceptance response or sending, through NAS signaling, information used for a paging acceptance response.

According to a seventh aspect, a terminal is provided. The terminal includes a processor, a memory, and a program or an instruction that is stored in the memory and that can be run on the processor, where the program or the instruction is executed by the processor to implement the steps of the information processing method in the first aspect, or the steps of the information processing method in the second aspect, or the steps of the information processing method in the third aspect.

According to an eighth aspect, a terminal is provided, including a processor and a communication interface, where the communication interface is configured to receive a paging message about the terminal from a first network; and the processor is configured to perform a first operation, where the first operation includes at least one of the following: determining paging cause information related to the terminal; and sending first information to a non-access stratum NAS of the terminal, where the first information includes at least one of the following: the paging message; paging cause information; information about the terminal in the paging message; first indication information, where the first indication information is used to indicate that the paging message is received; and type information of the paging message.

Alternatively, the communication interface is configured to receive a paging message about the terminal from a first network; and the processor is configured to perform a third operation, where the third operation includes at least one of the following: determining whether to perform paging rejection; determining whether to perform a paging acceptance response; determining whether to send information used for paging rejection to the first network; determining whether to send information used for a paging acceptance response to the first network; sending the information used for paging rejection to the first network; and sending the information used for a paging acceptance response to the first network.

Alternatively, the communication interface is configured to receive a paging message from a first network; and the processor is configured to perform a fourth operation based on the paging message, where the fourth operation includes at least one of the following: determining whether to perform paging rejection; determining whether to perform a paging acceptance response; determining whether to initiate paging rejection through AS signaling; determining whether to initiate paging rejection through NAS signaling; sending, through AS signaling, information used for paging rejection or sending, through NAS signaling, information used for paging rejection; and sending, through AS signaling, information used for a paging acceptance response or sending, through NAS signaling, information used for a paging acceptance response.

According to a ninth aspect, a readable storage medium is provided. A program or an instruction is stored in the readable storage medium, and the program or the instruction is executed by a processor to implement the steps of the information processing method in the first aspect, the steps of the information processing method in the second aspect, or the steps of the information processing method in the third aspect.

According to a tenth aspect, a chip is provided. The chip includes a processor and a communication interface, the communication interface is coupled to the processor, and the processor is configured to run a program or an instruction to implement the method in the first aspect, the method in the second aspect, or the method in the third aspect.

According to an eleventh aspect, a computer program/program product is provided. The computer program/program product is stored in a non-transient storage medium, and the program/program product is executed by at least one processor to implement the steps of the information processing method in the first aspect, the steps of the information processing method in the second aspect, or the steps of the information processing method in the third aspect.

In the embodiments of this application, the access stratum AS of the terminal receives the paging message about the terminal from the first network; and the AS of the terminal performs the first operation, where the first operation includes at least one of the following: determining the paging cause information related to the terminal; and sending the first information to the non-access stratum NAS of the terminal, where the first information includes at least one of the following: the paging message; the paging cause information; the information about the terminal in the paging message; the first indication information, where the first indication information is used to indicate that the paging message is received; and the type information of the paging message, so that the terminal can perform paging rejection or a paging reception response.

### BRIEF DESCRIPTION OF DRAWINGS

FIG 1 is a schematic diagram of a network system to which the embodiments of this application can be applied;
FIG 2 is a first schematic flowchart of an information processing method according to an embodiment of this application;
FIG 3 is a second schematic flowchart of an information processing method according to an embodiment of this application;
FIG 4 is a third schematic flowchart of an information processing method according to an embodiment of this application;
FIG 5 is a fourth schematic flowchart of an information processing method according to an embodiment of this application;
FIG 6 is a fifth schematic flowchart of an information processing method according to an embodiment of this application;
FIG 7 is a first schematic structural diagram of an information processing apparatus according to an embodiment of this application;
FIG 8 is a second schematic structural diagram of an information processing apparatus according to an embodiment of this application;
FIG 9 is a third schematic structural diagram of an information processing apparatus according to an embodiment of this application;
FIG 10 is a schematic structural diagram of a communication device according to an embodiment of this application; and
FIG 11 is a schematic structural diagram of hardware of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

In the specification and claims of this application, the terms "first", "second", and the like are intended to distinguish between similar objects but do not describe a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6^{th} generation (6^{th} Generation, 6G) communication system.

Currently, paging initiated by a radio access network (Radio Access Network, RAN) is not known to a non-access stratum (Non-access stratum, NAS) of a terminal/user equipment (User Equipment, UE).

However, with a paging cause including a paging message, an access stratum (Access Stratum, AS) of the UE does not have service information of another card and user tendency information (whether to respond to paging or reject paging). However, the NAS of the UE has the user tendency information, but does not know a paging cause of RAN paging. Therefore, how the UE responds to paging or refuses paging needs to be resolved.

In an optional embodiment of this application, a paging message initiated by the RAN includes at least one of the following: a paging message used to page a terminal in an RRC inactive state, which is used to notify the terminal of a system message change.

In an optional embodiment of this application, a paging cause related to the terminal and a cause of paging the terminal represent a meaning and may be interchanged.

In an optional embodiment of this application, supporting a paging cause function includes supporting indication of voice as the cause of paging the terminal or supporting recognition of voice as the cause of paging the terminal.

In an optional embodiment of this application, the paging cause information is related information used to indicate a paging cause.

In an optional embodiment of this application, the related information used to indicate a paging cause includes at least one of the following: a paging record list that can be used to indicate the cause of paging the terminal, quantity information of the terminal that is used to indicate that a paging cause is a first value, quantity information of the terminal that is used to indicate that a paging cause is a second value, and a bit sequence that can be used to indicate that a paging cause is a first value and/or a second value.

In an optional embodiment of this application, the paging cause information may include at least one of the following: information used to indicate that a paging cause is a first value, information used to indicate that a paging cause is a second value, and information used to indicate that a paging cause is unknown.

In an implementation, a multi-SIM terminal includes at least one of the following: a terminal in a multi-SIM mode, a terminal that supports a multi-SIM function, and a terminal that supports a paging cause function.

In an optional embodiment of this application, the first network or the network is a mobile communication network.

In an optional embodiment of this application, the paging message includes at least one of the following: an air interface (Uu interface) paging message, and a notification message in a NAS message.

In an optional embodiment of this application, the paging message about the terminal includes at least one of the following: a paging message used to page the terminal, and a paging message concerned by the terminal (for example, a paging message triggered by a system information change).

In an optional embodiment of this application, a paging request message is a paging request message of an interface between a CN and a RAN.

In an optional embodiment of this application, CN paging is paging initiated by the CN, for example, a notification message in NAS signaling sent by the CN, or a paging message sent by the RAN according to a paging request message sent by the CN to the RAN.

In an optional embodiment of this application, RAN paging is paging initiated by the RAN, for example, a paging message initiated by the terminal in an RRC inactive state.

In an optional embodiment of this application, the paging cause is a type of data that triggers paging. The type of the data includes a service type of the data. In an optional embodiment of this application, a type of a service and/or data may be reflected as a paging cause in a paging message and notification type information in a notification message. The type of the service and/or data may be a type of a service and/or data on a network side. The type of the data includes a type of a service to which the data belongs, and a type of the data itself (for example, control plane signaling).
(1) In an optional embodiment of this application, a paging cause function of the network includes at least one of the following:
   determining the type of the data;
   including the type of the data as a paging cause (for example, voice) in a paging request message and/or a paging message related to the terminal; and
   determining, according to the type of the data, whether to include information related to the paging cause in the paging message (for example, an information element (Information Element, IE)), where
   the data is at least one of the following: data for triggering paging of the terminal, received or generated data about the terminal, downlink data of the terminal, and data corresponding to a downlink data notification of the terminal.
(2) In an optional embodiment of this application, a paging cause function of a CN network element of the network includes at least one of the following:
   determining the type of the data, and sending the type of the data to the terminal and/or a RAN network element as a paging cause; and
   determining, according to the type of the data, whether to include information related to the paging cause in the paging message (for example, an information element (Information Element, IE)), where
   the data is at least one of the following: data for triggering paging of the terminal, received or generated data about the terminal, downlink data of the terminal, and data corresponding to a downlink data notification of the terminal.
(3) In an optional embodiment of this application, a paging cause function of a RAN network element of the network includes at least one of the following:
   understanding paging cause related information in a paging request message triggered by a CN network element;
   including the paging cause related information in an air interface paging message;
   determining the type of the data for the terminal in an inactive state;
   determining, for the terminal in an inactive state according to the type of the data, a cause for triggering paging of the terminal;
   determining, according to the type of the data or the determined paging cause, whether to include the paging cause related information in the paging message (for example, an information element (Information Element, IE)); and
   including the type of the data as the paging cause (for example, voice) in the paging message related to the terminal or including the determined paging cause in the paging message related to the terminal.

In an implementation, only in a case that it is determined that the paging cause is the first value, the determined paging cause is included in the paging message related to the terminal, where
the data is at least one of the following: data for triggering paging of the terminal, received or generated data about the terminal, downlink data of the terminal, and data corresponding to a downlink data notification of the terminal.

In an optional embodiment of this application, a paging cause function of the terminal includes at least one of the following: understanding a value of the paging cause, and determining the type of the data, where the data is at least one of the following: data for triggering paging of the terminal.

In an optional embodiment of this application, the paging cause supports at least voice.

In an optional embodiment of this application, the paging cause may include at least one of the following: a first value, a second value, and unknown.

In an optional embodiment of this application, that the paging cause is unknown indicates at least one of the following: it is uncertain whether a cause or data that triggers paging is voice or non-voice, any type of data, and/or service-triggered paging.

In an optional embodiment of this application, the first value includes at least one of the following: voice, a short message, IMS signaling, control plane signaling, and a system message change.

In an optional embodiment of this application, the second value includes one of the following: non-voice, a value except a value range of the first value, or another paging cause that triggers paging except a value range of the first value.

In an optional embodiment of this application, the value range of the first value includes at least one of the following: voice, a short message, IMS signaling, and control plane signaling.

Optionally, the first value is one or more in the value range of the first value.

Example 1: If the value range of the first value may include X, Y, and Z, the second value may be another paging cause that triggers paging except X, Y, and Z.
(1) In an implementation, if the cause for triggering paging or the type of the data for triggering paging is X, the first value is X.
(2) In another implementation, if the cause for triggering paging or the type of the data for triggering paging is X and Y, the first value is X and Y
(3) In another implementation, if the cause for triggering paging or the type of the data for triggering paging is A, the cause for triggering paging is the second value.

Example 2: If the value range of the first value may be X, the second value may be non-X.
(1) In an implementation, if the cause for triggering paging or the type of the data for triggering paging is X, the first value received by the terminal is X.
(2) In another implementation, if the cause for triggering paging or the type of the data for triggering paging is X and Y, the paging cause is one of the following: the first value (that is, X), and the first value and/or the second value.
(3) In another implementation, if the cause for triggering paging or the type of the data for triggering paging is Y, the paging cause is the second value. In an optional embodiment of this application, the type of the data includes but is not limited to at least one of the following: control plane signaling (for example, NAS signaling), user plane data, and a service type to which data belongs. The control plane signaling may include but is not limited to at least one of the following: a CN location update.

In an optional embodiment of this application, the type of the service and/or data includes but is not limited to at least one of the following: an IMS, an IMS voice service, a location service (LCS), a short message, control plane signaling (for example, a CN location update), IMS signaling (for example, an IMS periodic report), paging reception, a RAN notification, a rejection response to paging (for example, a busy indication), and IPv6 broadcast. Generally, the IMS has a dedicated data channel (for example, a PDU session). When data exists on the data channel used for the IMS, type information of the corresponding service and/or data may be derived. The IMS includes at least one of the following: IMS voice, an IMS short message, and IMS signaling.

In an optional embodiment of this application, the multi-SIM mode includes at least one of the following: the terminal is mounted with a plurality of SIMs (including a USIM), the terminal requests at least one multi-multi-card (Multi-USIM) function from the network, and the terminal supports at least one multi-SIM function. The multi-SIM function includes at least one of the following: a paging cause function, a paging conflict avoidance function, a function of triggering the terminal to leave the network, and a function of rejecting paging by the terminal.

In an optional embodiment of this application, that the first network supports a paging cause function includes at least one of the following: a CN of the first network supports a paging cause function, and a RAN of the first network supports a paging cause function. That a CN of the first network supports a paging cause function may include that a CN network element of the first network supports a paging cause function. Apart of CN network elements of the first network may support a paging cause function. That a RAN of the first network supports a paging cause function may include that a RAN network element of the first network supports a paging cause function. A part of RAN network elements of the first network may support a paging cause function.

In an optional embodiment of this application, that the first network does not support a paging cause function includes at least one of the following: a CN of the first network does not support a paging cause function, and a RAN of the first network does not support a paging cause function. That a CN of the first network does not support a paging cause function may include that a CN network element of the first network does not support a paging cause function. A part of CN network elements of the first network may not support a paging cause function. That a RAN of the first network does not support a paging cause function may include that a RAN network element of the first network does not support a paging cause function. A part of RAN network elements of the first network may not support a paging cause function.

In an optional embodiment of this application, that the network supports a paging rejection function includes at least one of the following: the CN supports a paging rejection function, and the RAN supports a paging rejection function.

In an optional embodiment of this application, that the network does not support a paging rejection function includes at least one of the following: the CN does not support a paging rejection function, and the RAN does not support a paging rejection function.

In an optional embodiment of this application, the paging rejection function of the network includes at least one of the following: the network receives the information that is sent by the terminal and that is used for paging rejection; and the network performs at least one of the following according to the information used for paging rejection: stopping paging the terminal, discarding or suspending data about the terminal, and releasing the connection to the terminal.

In an optional embodiment of this application, the paging rejection function of the terminal includes at least one of the following: the terminal sends the information used for paging rejection to the network. It is not difficult to understand that when the terminal does not intend to accept received paging, the terminal that supports a paging rejection function may send the information used for paging rejection to the network.

The sending information used for paging rejection includes at least one of the following: sending, through AS signaling, the information used for paging rejection, and sending, through NAS signaling, the information used for paging rejection.

In an optional embodiment of this application, an AS paging rejection function includes a paging rejection function through AS signaling.

In an optional embodiment of this application, a NAS paging rejection function includes a paging rejection function through NAS signaling.

In an optional embodiment of this application, AS signaling includes RRC signaling.

In an optional embodiment of this application, the signaling may also be referred to as a message.

In an optional embodiment of this application, the non-connected state may include at least one of the following: an idle state and an inactive state.
(1) In an optional embodiment of this application, the inactive state includes an RRC inactive state. In an optional embodiment of this application, the idle state includes at least one of the following: an RRC idle state and a CM idle state.

In an optional embodiment of this application, the connection between the terminal and the network includes at least one of the following: an RRC connection or a NAS connection.

In an optional embodiment of this application, the sending, through NAS signaling, information used for a paging acceptance response includes sending a service request message, where the service request message does not include the information used for paging rejection (information used for paging rejection such as reject paging indication information or release indication information). The release indication information is used to request a connection between the terminal and the network to enter a non-connected state. It is not difficult to understand that, for a terminal in an RRC inactive state, a NAS connection (or referred to as a CM connection, 5GMM connection) between the terminal and the network is in a connected state. When the terminal sends NAS signaling to the first network, an RRC connection between UE and a RAN network element of the first network is restored, and RAN paging is terminated. In a case that a CN network element of the first network receives the release indication information through NAS signaling, the connection between the terminal and the network is released or the RAN network element of the first network is notified to release the connection between the terminal and the network.

In an optional embodiment of this application, the sending, through AS signaling, information used for a paging acceptance response includes sending a connection establishment request or a connection recovery request message, where the connection establishment request or the connection recovery request message does not include the information used for paging rejection.

In an optional embodiment of this application, the sending, through NAS signaling, information used for paging rejection includes sending a service request message, where the service request message includes the information used for paging rejection.

In an optional embodiment of this application, the sending, through AS signaling, information used for paging rejection includes sending a connection establishment request or a connection recovery request message, where the connection establishment request or the connection recovery request message includes the information used for paging rejection.

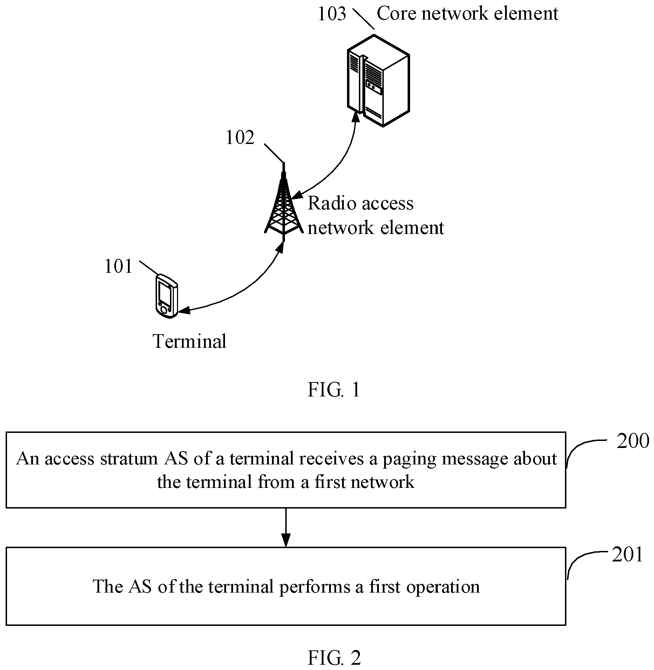

The embodiments of this application are described below with reference to the accompanying drawings. An information processing method and apparatus, a terminal, and a storage medium provided in the embodiments of this application may be applied to the following network system. As shown in FIG 1, the network system includes a terminal (101), a radio access network (Radio Access Network, RAN, 102) element, and a core network (Core Network, CN, 103) element.

In an embodiment of this application, a data channel may include but is not limited to one of the following: a PDU session, a PDN connection, a QoS flow, a bearer, and an Internet Protocol Security (Internet Protocol Security, IPsec) channel, where the bearer may be an evolved radio access bearer (Evolved Radio Access Bearer, E-RAB), a radio access bearer (Evolved Radio Access Bearer, RAB), a data radio bearer (Data Radio Bearer, DRB), a signaling radio bearers (signaling radio bearers, SRB), or the like.

In an embodiment of this application, a communication device may include at least one of the following: a communication network element device and a terminal.

In an embodiment of this application, a communication network element may include at least one of the following: a core network element and a radio access network element.

In the embodiments of this application, the core network element may include but is not limited to at least one of the following: a core network device, a core network node, a core network function, a core network element, a mobility management entity (Mobility Management Entity, MME), an access management function (Access Management Function, AMF), a session management function (Session Management Function, SMF), a user plane function (User Plane Function, UPF), a serving gateway (serving GW, SGW), a PDN gateway (PDN Gateway, PDN gateway), a policy control function (Policy Control Function, PCF), a policy and charging rules function (Policy and Charging Rules Function, PCRF), a serving GPRS support node (Serving GPRS Support Node, SGSN), a gateway GPRS support node (Gateway GPRS Support Node, GGSN), a unified data management (Unified Data Management, UDM), a unified data repository (Unified Data Repository, UDR), a home subscriber server (Home Subscriber Server, HSS), an application function (Application Function, AF), and a centralized network configuration (Centralized network configuration, CNC).

In the embodiments of this application, the radio access network element may include but is not limited to at least one of the following: a radio access network device, a radio access network node, a radio access network function, a radio access network unit, a Third Generation Partnership Project (Third Generation Partnership Project, 3GPP) radio access network, a non-3GPP radio access network, a centralized unit (Centralized Unit, CU), a distributed unit (Distributed Unit, DU), a base station, an evolved NodeB (evolved Node B, eNB), a 5G base station (gNB), a radio network controller (Radio Network Controller, RNC), a base station (NodeB), a non-3GPP interworking function (Non-3GPP Inter Working Function, N3IWF), an access control (Access Controller, AC) node, an access point (Access Point, AP) device, a wireless local area network (Wireless Local Area Networks, WLAN) node, and an N3IWF.

The base station may be a base transceiver station (BTS, Base Transceiver Station) in a global system for mobile communication (Global System for Mobile Communication, GSM) or Code Division Multiple Access (Code Division Multiple Access, CDMA), or may be a NodeB (NodeB) in Wideband Code Division Multiple Access (Wideband Code Division Multiple Access, WCDMA), or may be an evolved NodeB (eNB or e-NodeB, evolutional NodeB) and a 5G base station (gNB) in LTE. This is not limited in the embodiments of this application.

In the embodiments of this application, the terminal (for example, UE) may include a relay that supports a function of the terminal and/or a terminal that supports a relay function. The terminal may also be referred to as a terminal device to user equipment (User Equipment, UE). The terminal may be a terminal side device such as a mobile phone, a tablet personal computer (Tablet Personal Computer), a laptop computer (Laptop Computer), a personal digital assistant (Personal Digital Assistant, PDA), a mobile internet device (Mobile Internet Device, MID), a wearable device (Wearable Device), or an in-vehicle device. It should be noted that a specific type of the terminal is not limited in the embodiments of this application.

In an optional embodiment of this application, obtaining or acquiring may be understood as obtaining from a configuration, receiving, receiving through a request, obtaining through self-learning, deriving from unreceived information, or obtaining after processing based on received information. This may be specifically determined based on an actual requirement, and is not limited in the embodiments of this application.

In an optional embodiment of this application, sending may include broadcasting, broadcasting in a system message, returning after responding to a request, sending of dedicated signaling, and the like.

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

FIG 2 is a first schematic flowchart of an information processing method according to an embodiment of this application, applied to a terminal. As shown in FIG 2, the information processing method includes the following steps:

Step 200: An access stratum AS of a terminal receives a paging message about the terminal from a first network.

Optionally, the paging message includes at least one of the following: an air interface (Uu interface) paging message, and a notification message in a NAS message.

Optionally, the paging message about the terminal includes at least one of the following: a paging message used to page the terminal, and a paging message concerned by the terminal (for example, a paging message triggered by a system information change).

Step 201: The AS of the terminal performs a first operation.

The first operation includes at least one of the following:
determining paging cause information related to the terminal; and
sending first information to a non-access stratum NAS of the terminal.

In an implementation, after receiving the paging message about the terminal, the AS of the terminal determines, based on the paging message, the paging cause information related to the terminal, and then sends, to the NAS of the terminal, the first information including the paging cause information related to the terminal.

Optionally, the paging cause information is related information used to indicate a paging cause.

Optionally, the paging cause is a type of data that triggers paging. The type of the data includes a service type of the data.

Optionally, the first information includes at least one of the following:
the paging message;
paging cause information;
information about the terminal in the paging message;
first indication information, where the first indication information is used to indicate that the paging message is received; and
type information of the paging message.

In an implementation, information used to indicate paging rejection or information used to indicate a paging acceptance response is sent to the first network.

In this embodiment of this application, the access stratum AS of the terminal receives the paging message about the terminal from the first network; and the AS of the terminal performs the first operation, where the first operation includes at least one of the following: determining the paging cause information related to the terminal; and sending the first information to the non-access stratum NAS of the terminal, where the first information includes at least one of the following: the paging message; the paging cause information; the information about the terminal in the paging message; the first indication information, where the first indication information is used to indicate that the paging message is received; and the type information of the paging message, so that the terminal can perform paging rejection or a paging reception response.

Optionally, the information about the terminal in the paging message includes at least one of the following:
the paging cause information related to the terminal; and
a user identifier of the terminal;
   and/or
the paging cause information in the first information includes at least one of the following: paging cause information in the paging message, and the determined paging cause information related to the terminal.

In an implementation, the paging cause information in the paging message includes at least one of the following: paging cause information about the terminal in the paging message.

Optionally, the paging cause information includes at least one of the following:
information used to indicate that a paging cause is a first value;
information used to indicate that a paging cause is a second value; and
information used to indicate that a paging cause is unknown.

In an implementation, it is learned through core network domain indication information that the paging cause is voice (for example, CS voice).

In another implementation, it is learned through voice service indication information that the paging cause is voice (for example, IMS voice, also referred to as MMTEL).

Optionally, the first value includes at least one of the following: voice, a short message, IMS signaling, control plane signaling, and a system message change.

Optionally, the second value includes one of the following: non-voice, a value except a value range of the first value, or another paging cause that triggers paging except a value range of the first value.

Optionally, the value range of the first value includes at least one of the following: voice, a short message, IMS signaling, and control plane signaling.

Optionally, the first value is one or more in the value range of the first value.

For example, if the value range of the first value may include X, Y, and Z, the second value may be another paging cause that triggers paging except X, Y, and Z.

For example, if the value range of the first value may be X, the second value may be non-X.

Optionally, that a paging cause is unknown indicates at least one of the following: it is uncertain whether a cause or data that triggers paging is voice or non-voice, any type of data, and/or service-triggered paging.

Optionally, the paging message includes at least one of the following:
a paging message initiated by a core network CN; and
a paging message initiated by a radio access network RAN;
   and/or
the type information of the paging message includes at least one of the following:
   a paging message initiated by a CN; and
   a paging message initiated by a RAN.

Optionally, the paging message initiated by the CN includes at least one of the following: a paging message sent by the RAN to the terminal according to a paging request sent by the CN to the RAN; and a notification message (for example, NAS Notification) sent by the CN.

Optionally, the paging message initiated by the RAN includes at least one of the following: a paging message directly initiated by the RAN; a paging message triggered by a system message change; and a paging message sent to the terminal in an RRC inactive state.

In some optional embodiments, before the performing, by the AS of the terminal, a first operation, the method further includes:
sending, by the NAS of the terminal, second information to the AS of the terminal, where
the second information is used to indicate at least one of paging cause capability information and paging rejection capability information of the first network, whether the terminal is in a multi-SIM mode, whether an operation of determining a paging cause needs to be performed, and information used to request paging cause information.

Optionally, the performing, by the AS of the terminal, a first operation includes:
performing, by the AS of the terminal, the first operation according to the second information.

On the basis of the foregoing embodiment, the performing, by the AS of the terminal, the first operation according to the second information includes:
in a case that the paging message is a paging message initiated by a RAN, performing, by the AS of the terminal, the first operation according to the second information.

Optionally, the second information includes at least one of the following:
paging cause capability information of the first network;
paging rejection capability information of the first network;
second indication information;
third indication information;
information used to request paging cause information; and
information used to request the paging message initiated by the RAN,
where
the paging cause capability information of the first network includes one of the following: the network supports a paging cause function, and the network does not support a paging cause function;
the paging rejection capability information of the first network includes one of the following: the network supports a paging rejection function, and the network does not support a paging rejection function;
the second indication information is used to indicate one of the following: the terminal is in a multi-SIM mode, and the terminal is in a non-multi-SIM mode; and
the third indication information is used to indicate one of the following: an operation of determining a paging cause needs to be performed, and an operation of determining a paging cause does not need to be performed.

In an implementation, that the network supports a paging cause function includes at least one of the following: the CN supports a paging cause function, and the RAN supports a paging cause function.

In an implementation, that the network does not support a paging cause function includes at least one of the following: the CN does not support a paging cause function, and the RAN does not support a paging cause function.

In an implementation, that the network supports a paging rejection function includes at least one of the following: the CN supports a paging rejection function, and the RAN supports a paging rejection function.

In an implementation, that the network does not support a paging rejection function includes at least one of the following: the CN does not support a paging rejection function, and the RAN does not support a paging rejection function.

Optionally, the sending, by the NAS of the terminal, second information to the AS of the terminal includes:
in a case that it is determined that a first condition is met, sending, by the NAS of the terminal, the second information to the AS of the terminal, where
the first condition includes at least one of the following:
   the first network supports a paging cause function;
   the first network supports a paging rejection function;
   the terminal supports a paging cause function;
   the terminal supports a paging rejection function;
   the terminal is in a multi-SIM mode;
   the terminal has first tendency information; and
   the terminal is in an inactive state.

Optionally, the performing, by the AS of the terminal, a first operation includes:
in a case that it is determined that a second condition is met, performing, by the AS of the terminal, the first operation, where
the second condition includes at least one of the following:
   the paging message includes paging cause information or can determine the paging cause information related to the terminal;
   the paging cause information does not include a paging cause whose value is unknown;
   the paging message is a paging message initiated by a RAN;
   the terminal supports a paging cause function;
   the terminal supports a paging rejection function;
   the terminal is in a multi-SIM mode;
   third indication information is received, where the third indication information indicates that an operation of determining a paging cause needs to be performed;
   information used to request paging cause information is received;
   information used to request a RAN paging message is received;
   the paging cause information is related to the terminal;
   the first network supports a paging rejection function or an AS paging rejection function; and
   the terminal is in an inactive state.

The supporting a paging rejection function includes at least one of the following: supporting paging rejection performed through AS signaling, and supporting paging rejection performed through NAS signaling.

The supporting an AS paging rejection function is supporting paging rejection performed through AS signaling.

In an implementation, AS signaling includes RRC (radio resource control) signaling.

In some other optional embodiments, after the performing, by the AS of the terminal, a first operation, the method further includes:
performing, by the NAS of the terminal, a second operation according to the first information and/or first tendency information, where
the second operation includes at least one of the following:
   determining whether to perform a paging acceptance response;
   determining whether to perform paging rejection;
   determining whether to initiate paging rejection through AS signaling;
   determining whether to initiate paging rejection through NAS signaling;
   determining whether to send fourth indication information to the AS of the terminal;
   determining whether to send fifth indication information to the AS of the terminal;
   sending, through NAS signaling, information used for a paging acceptance response;
   sending, through NAS signaling, information used for paging rejection;
   sending the fourth indication information to the AS of the terminal; and
   sending the fifth indication information to the AS of the terminal,
   where
   the fourth indication information is used to indicate to perform paging rejection on the paging message; and
   the fifth indication information is used to indicate one of the following: performing a paging acceptance response for the paging message, initiating connection establishment, and initiating connection recovery; and
   the first tendency information includes at least one of the following:
      information used to indicate to reject all paging;
      information about a first data channel, where the information about the first data channel is used to indicate to reject paging related to the first data channel;
      information used to indicate to reject paging except that a paging cause is a first value;
      information used to indicate to accept only paging except that a paging cause is a first value;
      information used to indicate to accept all paging;
      information used to indicate to accept paging whose paging cause is a first value; and
      information about a second data channel, where the information about the second data channel is used to indicate to accept paging related to the second data channel.

In an implementation, in a case that it is determined to perform paging rejection and/or it is determined to perform paging rejection through AS signaling, the fourth indication information is sent to the AS of the terminal.

In an implementation, the first tendency information is preconfigured on the terminal, or the first tendency information is set by a user of the terminal.

In an implementation, the sending, through NAS signaling, information used for a paging acceptance response includes sending a service request message, where the service request message does not include the information used for paging rejection.

The sending, through AS signaling, information used for a paging acceptance response includes sending a connection establishment request or a connection recovery request message, where the connection establishment request or the connection recovery request message does not include the information used for paging rejection.

In another implementation, the sending, through NAS signaling, information used for paging rejection includes sending a service request message, where the service request message includes the information used for paging rejection.

The sending, through AS signaling, information used for paging rejection includes sending a connection establishment request or a connection recovery request message, where the connection establishment request or the connection recovery request message includes the information used for paging rejection.

Optionally, the determining whether to perform paging rejection includes: in a case that a third condition is met, determining to perform paging rejection, where
the third condition includes at least one of the following:
the paging message is not accepted by first tendency information;
the paging message is rejected by the first tendency information; and
the paging message is rejected by the fourth indication information;
   and/or
the determining whether to perform a paging response includes: in a case that a fourth condition is met, determining to perform a paging response, where
the fourth condition includes: the paging message is accepted by the first tendency information or is not rejected by the first tendency information.

It can be understood that, that the paging message is not accepted by the first tendency information or that the paging message is rejected by the first tendency information means that the paging message does not belong to any one of the information included in the first tendency information.

That the paging message is rejected by the fourth indication information means that the fourth indication information indicates to perform paging rejection on the paging message.

Optionally, the determining whether to initiate paging rejection through AS signaling and/or the determining whether to send fourth indication information to the AS of the terminal includes:
in a case that a fifth condition is met, determining to initiate paging rejection through AS signaling and/or determining to send the fourth indication information to the AS of the terminal, where
the fifth condition includes at least one of the following:
   it is determined to perform paging rejection;
   the paging message is not accepted by first tendency information;
   the paging message is rejected by the first tendency information;
   the paging message is a paging message initiated by a RAN;
   the terminal supports an AS paging rejection function; and
   the first network supports an AS paging rejection function; and
   the terminal is in an inactive state.

Optionally, the supporting an AS paging rejection function is supporting paging rejection performed through AS signaling.

In an implementation, AS signaling includes RRC (radio resource control) signaling.

Optionally, the determining whether to initiate paging rejection through NAS signaling and/or the sending, through NAS signaling, information used for paging rejection includes:
in a case that a sixth condition is met, determining to initiate paging rejection through NAS signaling and/or sending, through NAS signaling, the information used for paging rejection, where
the sixth condition includes at least one of the following:
   it is determined to perform paging rejection;
   the paging message is not accepted by first tendency information;
   the paging message is rejected by the first tendency information;
   the paging message is a paging message initiated by a CN;
   the terminal supports a NAS paging rejection function;
   the first network supports a NAS paging rejection function;
   the terminal is in an idle state;
   the paging message is a paging message initiated by a RAN;
   the terminal does not support an AS paging rejection function; and
   the first network does not support an AS paging rejection function; and
   the terminal is in an inactive state.

In an implementation, the paging message is the paging message initiated by the RAN, but the terminal and/or the first network do not support the AS paging rejection function. In this case, the information used for paging rejection may be sent through NAS signaling.

In an implementation, the sixth condition includes at least one of the following:
it is determined to perform paging rejection;
the paging message is not accepted by first tendency information;
the paging message is rejected by the first tendency information;
the paging message is a paging message initiated by a CN;
the terminal supports a NAS paging rejection function;
the first network supports a NAS paging rejection function; and
the terminal is in an idle state.

In another implementation, the sixth condition includes at least one of the following:
it is determined to perform paging rejection;
the paging message is not accepted by first tendency information;
the paging message is rejected by the first tendency information;
the paging message is a paging message initiated by a RAN;
the terminal does not support an AS paging rejection function;
the first network does not support an AS paging rejection function; and
the terminal is in an inactive state.

In some other optional embodiments, the determining whether to initiate a paging acceptance response through AS signaling and/or the determining whether to send fifth indication information to the AS of the terminal includes:
in a case that a seventh condition is met, determining to initiate a paging acceptance response through AS signaling and/or determining whether to send the fifth indication information to the AS of the terminal, where
the seventh condition includes at least one of the following:
   it is determined to perform a paging acceptance response;
   the paging message is accepted by first tendency information or is not rejected by first tendency information;
   the paging message is a paging message initiated by a RAN; and
   the terminal is in an inactive state.

In some other optional embodiments, the determining whether to initiate a paging acceptance response through NAS signaling and/or the sending, through NAS signaling, information used for a paging acceptance response includes:
in a case that an eighth condition is met, determining to initiate a paging acceptance response through NAS signaling and/or sending, through NAS signaling, the information used for a paging acceptance response, where
the eighth condition includes at least one of the following:
   it is determined to perform a paging acceptance response;
   the paging message is accepted by first tendency information or is not rejected by first tendency information;
   the paging message is a paging message initiated by a CN;
   the terminal is in an idle state;
   the paging message is a paging message initiated by a RAN;
   the terminal supports performing a paging acceptance response for RAN paging through NAS signaling;
   the first network performs a paging acceptance response for RAN paging through NAS signaling; and
   the terminal is in an inactive state.

In an implementation, the eighth condition includes at least one of the following:
it is determined to perform a paging acceptance response;
the paging message is accepted by first tendency information or is not rejected by first tendency information;
the paging message is a paging message initiated by a CN;
the terminal is in an idle state;

In another implementation, the eighth condition includes at least one of the following:
it is determined to perform a paging acceptance response;
the paging message is accepted by first tendency information or is not rejected by first tendency information;
the paging message is a paging message initiated by a RAN;
the terminal supports performing a paging acceptance response for RAN paging through NAS signaling;
the first network performs a paging acceptance response for RAN paging through NAS signaling; and
the terminal is in an inactive state.

It is not difficult to understand that RAN paging is notified to the NAS of the terminal currently. To enable the NAS of the terminal to determine to perform a paging acceptance response or paging rejection, paging cause information in the RAN paging may be sent to the NAS of the terminal. In a case that it is determined to accept a paging response, in an implementation, the NAS of the terminal may trigger a NAS packet (for example, a service request message). The NAS packet is sent to the AS of the terminal, and the AS of the terminal may send, to the network according to the received NAS packet, information used to indicate a paging acceptance response (for example, a connection establishment request or a connection recovery request). In a case that it is determined to accept a paging response, in another implementation, the NAS of the terminal sends fifth indication information to the AS of the terminal, and the AS of the terminal may send, to the network according to the fifth indication information, information used to indicate a paging acceptance response (for example, a connection establishment request or a connection recovery request).

In some other optional embodiments, after the sending the fourth indication information to the AS of the terminal, the method further includes:
sending, by the AS of the terminal, information used for paging rejection to the first network according to the fourth indication information;
   and/or
after the sending the fifth indication information to the AS of the terminal, the method further includes:
   sending, by the AS of the terminal, related information used for paging acceptance to the first network according to the fifth indication information.

In an implementation, the information used for paging rejection is sent to the first network through AS signaling.

Optionally, the information used for paging rejection includes one of the following: reject paging indication information and release indication information. The release indication information is used to request a connection between the terminal and the network to enter a non-connected state. It is not difficult to understand that, for a terminal in an RRC inactive state, a NAS connection (or referred to as a CM connection, 5GMM connection) between the terminal and the network is in a connected state. When the terminal sends NAS signaling to the first network, an RRC connection between UE and a RAN network element of the first network is restored, and RAN paging is terminated. In a case that a CN network element of the first network receives the release indication information through NAS signaling, the connection between the terminal and the network is released or the RAN network element of the first network is notified to release the connection between the terminal and the network.

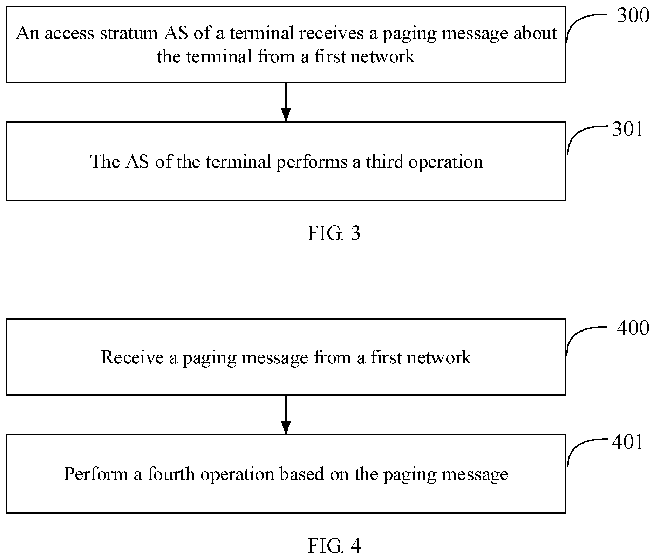

FIG 3 is a second schematic flowchart of an information processing method according to an embodiment of this application, applied to a terminal. As shown in FIG 3, the information processing method includes the following steps:
Step 300: An access stratum AS of a terminal receives a paging message about the terminal from a first network.
Step 301: The AS of the terminal performs a third operation.

The third operation includes at least one of the following:
determining whether to perform paging rejection;
determining whether to perform a paging acceptance response;
determining whether to send information used for paging rejection to the first network;
determining whether to send information used for a paging acceptance response to the first network;
sending the information used for paging rejection to the first network; and
sending the information used for a paging acceptance response to the first network.

In an implementation, the information used for paging rejection is sent to the first network through AS signaling.

In this embodiment of this application, the access stratum AS of the terminal receives the paging message about the terminal from the first network; and the AS of the terminal performs the third operation, so that the terminal can perform paging rejection or a paging reception response.

In some optional embodiments, before the performing, by the AS of the terminal, a third operation, the method further includes:
sending, by a NAS of the terminal, third information to the AS of the terminal; and
the performing, by the AS of the terminal, a third operation includes:
   performing, by the AS of the terminal, the third operation according to the third information.

Optionally, the third information includes at least one of the following:
sixth indication information, where the sixth indication information performs paging rejection on the paging message;
seventh indication information, where the seventh indication information is used to indicate one of the following: performing a paging acceptance response for the paging message, initiating connection establishment, and initiating connection recovery; and
first tendency information, where
the first tendency information includes at least one of the following:
   information used to indicate to reject all paging;
   information about a first data channel, where the information about the first data channel is used to indicate to reject paging related to the first data channel;
   information used to indicate to reject paging except that a paging cause is a first value;
   information used to indicate to accept only paging except that a paging cause is a first value;
   information used to indicate to accept all paging;
   information used to indicate to accept paging whose paging cause is a first value; and
   information about a second data channel, where the information about the second data channel is used to indicate to accept paging related to the second data channel.

In an implementation, the paging related to the first data channel includes paging triggered by data in the first data channel.

In an implementation, the paging related to the second data channel includes paging triggered by data in the second data channel.

In this embodiment of this application, the access stratum AS of the terminal receives the paging message about the terminal from the first network; add the AS of the terminal performs the third operation according to user tendency information, to implement a function of performing paging rejection or a paging reception response by a multi-SIM terminal.

Optionally, the determining whether to perform paging rejection and/or the determining whether to send information used for paging rejection to the first network includes:
in a case that a ninth condition is met, determining to perform paging rejection and/or determining to send the information used for paging rejection to the first network, where
the ninth condition includes at least one of the following:
   the paging message is not accepted by first tendency information;
   the paging message is rejected by the first tendency information;
   the paging message is rejected by the sixth indication information.

Optionally, the determining whether to perform a paging acceptance response and/or the determining whether to send information used for a paging acceptance response to the first network includes:
in a case that a tenth condition is met, determining to perform a paging acceptance response and/or determining to send the information used for a paging acceptance response to the first network, where
the tenth condition includes at least one of the following:
   the paging message is accepted by first tendency information or is not rejected by first tendency information;
   the sixth indication information is not received; and
   the seventh indication information is received.

Optionally, the information used for paging rejection includes one of the following: reject paging indication information and release indication information. The release indication information is used to request a connection between the terminal and the network to enter a non-connected state. It is not difficult to understand that, for a terminal in an RRC inactive state, a NAS connection (or referred to as a CM connection, 5GMM connection) between the terminal and the network is in a connected state. When the terminal sends NAS signaling to the first network, an RRC connection between UE and a RAN network element of the first network is restored, and RAN paging is terminated. In a case that a CN network element of the first network receives the release indication information through NAS signaling, the connection between the terminal and the network is released or the RAN network element of the first network is notified to release the connection between the terminal and the network.

FIG 4 is a third schematic flowchart of an information processing method according to an embodiment of this application. The method is applied to a terminal and includes:
Step 400: Receive a paging message from a first network.
Step 401: Perform a fourth operation based on the paging message.

The fourth operation includes at least one of the following:
determining whether to perform paging rejection;
determining whether to perform a paging acceptance response;
determining whether to initiate paging rejection through AS signaling;
determining whether to initiate paging rejection through NAS signaling;
sending, through AS signaling, information used for paging rejection or sending, through NAS signaling, information used for paging rejection; and
sending, through AS signaling, information used for a paging acceptance response or sending, through NAS signaling, information used for a paging acceptance response.

In this embodiment of this application, the terminal receives the paging message from the network, and performs the fourth operation based on the paging message, so that the terminal can perform paging rejection or a paging reception response.

Optionally, before the performing a fourth operation, the method further includes:
obtaining first tendency information; and
the performing a fourth operation includes:
   performing the fourth operation according to the first tendency information.

In this embodiment of this application, the terminal receives the paging message from the network, and performs the fourth operation based on the paging message and the first tendency information, so that the terminal can perform a paging rejection or a paging reception response.

Optionally, the first tendency information includes at least one of the following:
information used to indicate to reject all paging;
information about a first data channel, where the information about the first data channel is used to indicate to reject paging related to the first data channel;
information used to indicate to reject paging except that a paging cause is a first value;
information used to indicate to accept only paging except that a paging cause is a first value;
information used to indicate to accept all paging;
information used to indicate to accept paging whose paging cause is a first value; and
information about a second data channel, where the information about the second data channel is used to indicate to accept paging related to the second data channel.

Optionally, the determining whether to perform paging rejection includes:
in a case that an eleventh condition is met, determining to perform paging rejection, where
the eleventh condition includes at least one of the following:
   the paging message is not accepted by first tendency information;
   the paging message is rejected by the first tendency information;
      and/or
   the determining whether to perform a paging response includes: in a case that a twelfth condition is met, determining to perform a paging response, where
   the twelfth condition includes: the paging message is accepted by the first tendency information or is not rejected by the first tendency information.

Optionally, the determining to initiate paging rejection through AS signaling and/or the sending, through AS signaling, information used for paging rejection includes:
in a case that a thirteenth condition is met, determining to initiate paging rejection through AS signaling and/or sending, through AS signaling, the information used for paging rejection, where
the thirteenth condition includes at least one of the following:
   it is determined to perform paging rejection;
   the paging message is not accepted by first tendency information;
   the paging message is rejected by the first tendency information;
   the paging message is a paging message initiated by a RAN;
   the terminal supports an AS paging rejection function; and
   the first network supports an AS paging rejection function.

Optionally, the determining to initiate paging rejection through NAS signaling and/or the sending, through NAS signaling, information used for paging rejection includes:
in a case that a fourteenth condition is met, determining to initiate paging rejection through NAS signaling and/or sending, through NAS signaling, the information used for paging rejection, where
the fourteenth condition includes at least one of the following:
   it is determined to perform paging rejection;
   the paging message is not accepted by first tendency information;
   the paging message is rejected by the first tendency information;
   the paging message is a paging message initiated by a CN;
   the terminal supports a NAS paging rejection function;
   the first network supports a NAS paging rejection function;
   the paging message is a paging message initiated by a RAN;
   the terminal does not support an AS paging rejection function; and
   the first network does not support an AS paging rejection function.

In an implementation, the paging message is the paging message initiated by the RAN, but the terminal and/or the first network do not support the AS paging rejection function. In this case, the information used to indicate paging rejection may be sent through NAS signaling.

Optionally, the determining whether to initiate a paging acceptance response through AS signaling and/or the sending, through AS signaling, information used for a paging acceptance response includes:
in a case that a fifteenth condition is met, determining to initiate a paging acceptance response through AS signaling and/or sending, through AS signaling, the information used for a paging acceptance response, where
the fifteenth condition includes at least one of the following:
   it is determined to perform a paging acceptance response;
   the paging message is accepted by first tendency information or is not rejected by first tendency information;
   the paging message is a paging message initiated by a RAN; and
   the terminal is in an inactive state.

The determining whether to initiate a paging acceptance response through NAS signaling and/or the sending, through NAS signaling, information used for a paging acceptance response includes:
in a case that a sixteenth condition is met, determining to initiate a paging acceptance response through NAS signaling and/or sending, through NAS signaling, the information used for a paging acceptance response, where
the sixteenth condition includes at least one of the following:
   it is determined to perform a paging acceptance response;
   the paging message is accepted by first tendency information or is not rejected by first tendency information;
   the paging message is a paging message initiated by a CN;
   the terminal is in an idle state;
   the paging message is a paging message initiated by a RAN;
   the terminal supports performing a paging acceptance response for RAN paging through NAS signaling;
   the first network performs a paging acceptance response for RAN paging through NAS signaling; and
   the terminal is in an inactive state.

In an implementation, the sixteenth condition includes at least one of the following:
it is determined to perform a paging acceptance response;
the paging message is accepted by first tendency information or is not rejected by first tendency information;
the paging message is a paging message initiated by a CN;
the terminal is in an idle state;

In another implementation, the sixteenth condition includes at least one of the following:
it is determined to perform a paging acceptance response;
the paging message is accepted by first tendency information or is not rejected by first tendency information;
the paging message is a paging message initiated by a RAN;
the terminal supports performing a paging acceptance response for RAN paging through NAS signaling;
the first network performs a paging acceptance response for RAN paging through NAS signaling; and
the terminal is in an inactive state.

It is not difficult to understand that RAN paging is notified to the NAS of the terminal currently. To enable the NAS of the terminal to determine to perform a paging acceptance response or paging rejection, paging cause information in the RAN paging may be sent to the NAS of the terminal. In a case that it is determined to accept a paging response, in an implementation, the NAS of the terminal may trigger a NAS packet (for example, a service request message). The NAS packet is sent to the AS of the terminal, and the AS of the terminal may send, to the network according to the received NAS packet, information used to indicate a paging acceptance response (for example, a connection establishment request or a connection recovery request). In a case that it is determined to accept a paging response, in another implementation, the NAS of the terminal sends fifth indication information to the AS of the terminal, and the AS of the terminal may send, to the network according to the fifth indication information, information used to indicate a paging acceptance response (for example, a connection establishment request connection recovery request).

Optionally, the information used for paging rejection includes one of the following: reject paging indication information and release indication information. The release indication information is used to request a connection between the terminal and the network to enter a non-connected state. It is not difficult to understand that, for a terminal in an RRC inactive state, a NAS connection (or referred to as a CM connection, 5GMM connection) between the terminal and the network is in a connected state. When the terminal sends NAS signaling to the first network, an RRC connection between UE and a RAN network element of the first network is restored, and RAN paging is terminated. In a case that a CN network element of the first network receives the release indication information through NAS signaling, the connection between the terminal and the network is released or the RAN network element of the first network is notified to release the connection between the terminal and the network.

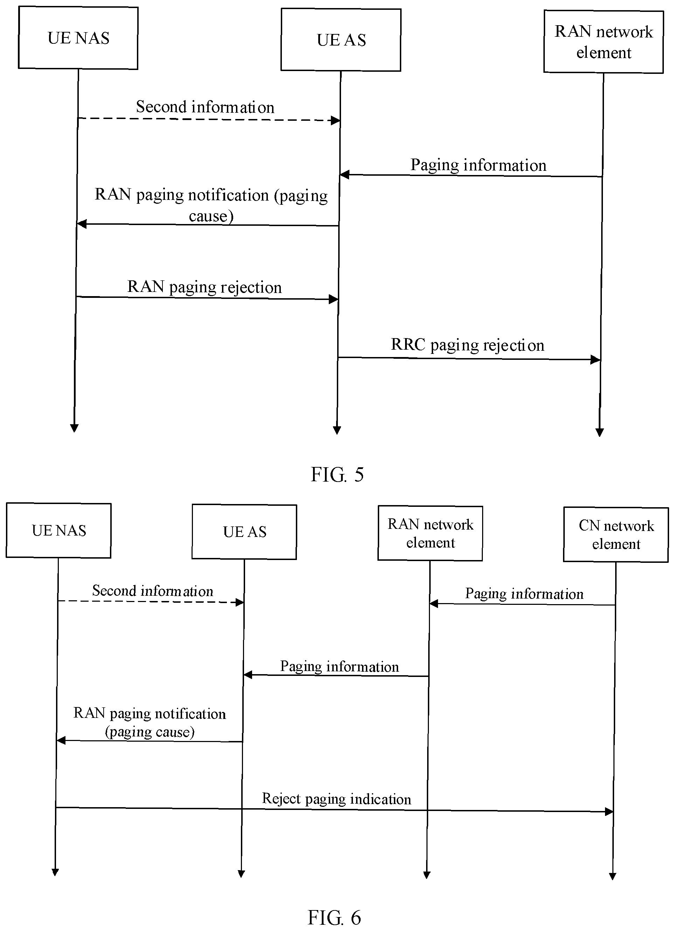

FIG 5 is a fourth schematic flowchart of an information processing method according to an embodiment of this application. As shown in FIG 5, the information processing method includes the following steps:
Step 500: A RAN network element sends a paging message to an AS of UE.
Step 501: The AS of the UE receives the paging message about the UE.

Optionally, step 502: ANAS of the UE sends second information to the AS of the UE.

Step 503: The AS of the UE sends first information to the NAS of the UE, where the first information carries paging cause information.

Step 504: The NAS of the UE determines to perform paging rejection, and sends, to the AS of the UE, information used to indicate to perform paging rejection.

Step 505: The AS of the UE initiates paging rejection to the RAN network element through AS signaling.

FIG 6 is a fifth schematic flowchart of an information processing method according to an embodiment of this application. As shown in FIG 6, the information processing method includes the following steps:

Step 600: A CN network element sends a paging message to a RAN network element.

Step 601: The RAN network element sends the paging message to an AS of UE.

Step 602: The AS of the UE receives the paging message about the UE.

Optionally, step 603: A NAS of the UE sends second information to the AS of the UE.

Step 604: The AS of the UE sends first information to the NAS of the UE, where the first information carries paging cause information.

Step 605: The NAS of the UE determines to perform paging rejection, and initiates paging rejection to the CN network element through NAS signaling.

It should be noted that the information processing method provided in the embodiments of this application may be performed by an information processing apparatus, or a control module that is in the information processing apparatus and that is configured to perform the information processing method. In the embodiments of this application, that the information processing apparatus performs the information processing method is used as an example to describe the information processing apparatus provided in the embodiments of this application.

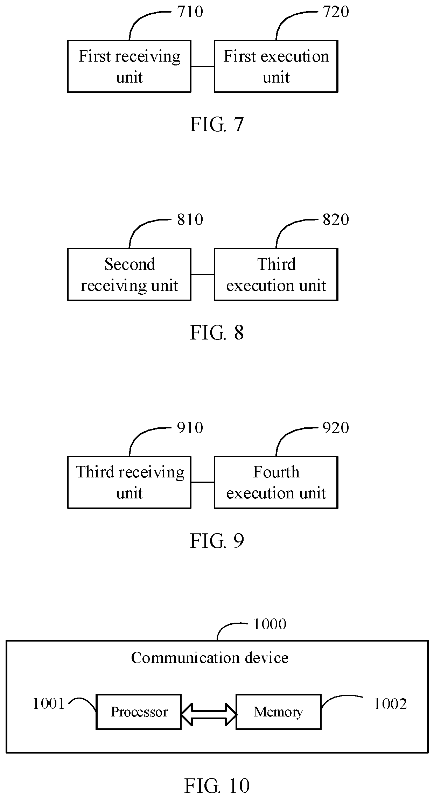

FIG 7 is a first schematic structural diagram of an information processing apparatus according to an embodiment of this application. As shown in FIG 7, the information processing apparatus includes a first receiving unit 710 and a first execution unit 720.

The first receiving unit 710 is configured to receive a paging message about a terminal from a first network; and
the first execution unit 720 is configured to perform a first operation, where
the first operation includes at least one of the following:
   determining paging cause information related to the terminal; and
   sending first information to a non-access stratum NAS of the terminal, where
   where
   the first information includes at least one of the following:
      the paging message;
      paging cause information;
      information about the terminal in the paging message;
      first indication information, where the first indication information is used to indicate that the paging message is received; and
      type information of the paging message.

In this embodiment of this application, the terminal receives the paging message about the terminal from the first network; and performs the first operation, where the first operation includes at least one of the following: determining the paging cause information related to the terminal; and sending the first information to the non-access stratum NAS of the terminal, where the first information includes at least one of the following: the paging message; the paging cause information; the information about the terminal in the paging message; the first indication information, where the first indication information is used to indicate that the paging message is received; and the type information of the paging message, so that the terminal can perform paging rejection or a paging reception response.

Optionally, the information about the terminal in the paging message includes at least one of the following:
the paging cause information related to the terminal; and
a user identifier of the terminal;
   and/or
the paging cause information in the first information includes at least one of the following: paging cause information in the paging message, and the determined paging cause information related to the terminal.

Optionally, the paging cause information includes at least one of the following:
information used to indicate that a paging cause is a first value;
information used to indicate that a paging cause is a second value; and
information used to indicate that a paging cause is unknown.

Optionally, the paging message includes at least one of the following:
a paging message initiated by a core network CN; and
a paging message initiated by a radio access network RAN;
   and/or
the type information of the paging message includes at least one of the following:
   a paging message initiated by a CN; and
   a paging message initiated by a RAN.

Optionally, the apparatus further includes:
a first sending unit, configured to send second information; and
the first execution unit is configured to perform the first operation according to the second information.

Optionally, the performing the first operation according to the second information includes:
in a case that the paging message is a paging message initiated by a RAN, performing the first operation according to the second information.

Optionally, the second information includes at least one of the following:
paging cause capability information of the first network;
paging rejection capability information of the first network;
second indication information;
third indication information;
information used to request paging cause information; and
information used to request the paging message initiated by the RAN,
where
the paging cause capability information of the first network includes one of the following: the network supports a paging cause function, and the network does not support a paging cause function;
the paging rejection capability information of the first network includes one of the following: the network supports a paging rejection function, and the network does not support a paging rejection function;
the second indication information is used to indicate one of the following: the terminal is in a multi-SIM mode, and the terminal is in a non-multi-SIM mode; and
the third indication information is used to indicate one of the following: an operation of determining a paging cause needs to be performed, and an operation of determining a paging cause does not need to be performed.

Optionally, the first sending unit is configured to:
in a case that a first condition is met, send the second information, where
the first condition includes at least one of the following:
   the first network supports a paging cause function;
   the first network supports a paging rejection function;
   the terminal supports a paging cause function;
   the terminal supports a paging rejection function;
   the terminal is in a multi-SIM mode;
   the terminal has first tendency information; and
   the terminal is in an inactive state.

Optionally, the first execution unit is configured to:
in a case that it is determined that a second condition is met, perform the first operation, where
the second condition includes at least one of the following:
   the paging message includes paging cause information or can determine the paging cause information related to the terminal;
   the paging cause information does not include a paging cause whose value is unknown;
   the paging message is a paging message initiated by a RAN;
   the terminal supports a paging cause function;
   the terminal supports a paging rejection function;
   the terminal is in a multi-SIM mode;
   third indication information is received, where the third indication information indicates that an operation of determining a paging cause needs to be performed;
   information used to request paging cause information is received;
   information used to request a RAN paging message is received;
   the paging cause information is related to the terminal;
   the first network supports a paging rejection function or an AS paging rejection function; and
   the terminal is in an inactive state.

Optionally, the apparatus further includes:
a second execution unit, configured to perform a second operation according to the first information and/or first tendency information, where
the second operation includes at least one of the following:
   determining whether to perform a paging acceptance response;
   determining whether to perform paging rejection;
   determining whether to initiate paging rejection through AS signaling;
   determining whether to initiate paging rejection through NAS signaling;
   determining whether to send fourth indication information to the AS of the terminal;
   determining whether to send fifth indication information to the AS of the terminal;
   sending, through NAS signaling, information used for a paging acceptance response;
   sending, through NAS signaling, information used for paging rejection;
   sending the fourth indication information to the AS of the terminal; and
   sending the fifth indication information to the AS of the terminal,
   where
   the fourth indication information is used to indicate to perform paging rejection on the paging message; and
   the fifth indication information is used to indicate one of the following: performing a paging acceptance response for the paging message, initiating connection establishment, and initiating connection recovery; and
   the first tendency information includes at least one of the following:
      information used to indicate to reject all paging;
      information about a first data channel, where the information about the first data channel is used to indicate to reject paging related to the first data channel;
      information used to indicate to reject paging except that a paging cause is a first value;
      information used to indicate to accept only paging except that a paging cause is a first value;
      information used to indicate to accept all paging;
      information used to indicate to accept paging whose paging cause is a first value; and
      information about a second data channel, where the information about the second data channel is used to indicate to accept paging related to the second data channel.

Optionally, the determining whether to perform paging rejection includes: in a case that a third condition is met, determining to perform paging rejection, where
the third condition includes at least one of the following:
the paging message is not accepted by first tendency information;
the paging message is rejected by the first tendency information; and
the paging message is rejected by the fourth indication information;
   and/or
the determining whether to perform a paging response includes: in a case that a fourth condition is met, determining to perform a paging response, where
the fourth condition includes: the paging message is accepted by the first tendency information or is not rejected by the first tendency information.

Optionally, the determining whether to initiate paging rejection through AS signaling and/or the determining whether to send fourth indication information to the AS of the terminal includes:
in a case that a fifth condition is met, determining to initiate paging rejection through AS signaling and/or determining to send the fourth indication information to the AS of the terminal, where
the fifth condition includes at least one of the following:
   it is determined to perform paging rejection;
   the paging message is not accepted by first tendency information;
   the paging message is rejected by the first tendency information;
   the paging message is a paging message initiated by a RAN;
   the terminal supports an AS paging rejection function; and
   the first network supports an AS paging rejection function; and
   the terminal is in an inactive state.

Optionally, the determining whether to initiate paging rejection through NAS signaling and/or the sending, through NAS signaling, information used for paging rejection includes:
in a case that a sixth condition is met, determining to initiate paging rejection through NAS signaling and/or sending, through NAS signaling, the information used for paging rejection, where
the sixth condition includes at least one of the following:
   it is determined to perform paging rejection;
   the paging message is not accepted by first tendency information;
   the paging message is rejected by the first tendency information;
   the paging message is a paging message initiated by a CN;
   the terminal supports a NAS paging rejection function;
   the first network supports a NAS paging rejection function;
   the terminal is in an idle state;
   the paging message is a paging message initiated by a RAN;
   the terminal does not support an AS paging rejection function; and
   the first network does not support an AS paging rejection function; and
   the terminal is in an inactive state.

Optionally, the determining whether to initiate a paging acceptance response through AS signaling and/or the determining whether to send fifth indication information to the AS of the terminal includes:
in a case that a seventh condition is met, determining to initiate a paging acceptance response through AS signaling and/or determining whether to send the fifth indication information to the AS of the terminal, where
the seventh condition includes at least one of the following:
   it is determined to perform a paging acceptance response;
   the paging message is accepted by first tendency information or is not rejected by first tendency information;
   the paging message is a paging message initiated by a RAN;
   the terminal is in an inactive state.

Optionally, the determining whether to initiate a paging acceptance response through NAS signaling and/or the sending, through NAS signaling, information used for a paging acceptance response includes:
in a case that an eighth condition is met, determining to initiate a paging acceptance response through NAS signaling and/or sending, through NAS signaling, the information used for a paging acceptance response, where
the eighth condition includes at least one of the following:
   it is determined to perform a paging acceptance response;
   the paging message is accepted by first tendency information or is not rejected by first tendency information;
   the paging message is a paging message initiated by a CN;
   the terminal is in an idle state;
   the paging message is a paging message initiated by a RAN;
   the terminal supports performing a paging acceptance response for RAN paging through NAS signaling;
   the first network performs a paging acceptance response for RAN paging through NAS signaling; and
   the terminal is in an inactive state.

Optionally, the apparatus further includes:
a second sending unit, configured to send information used for paging rejection to the first network according to the fourth indication information;
   and/or
a third sending unit, configured to send related information used for paging acceptance to the first network according to the fifth indication information.

Optionally, the information used for paging rejection includes one of the following: reject paging indication information and release indication information. The release indication information is used to request a connection between the terminal and the network to enter a non-connected state. It is not difficult to understand that, for a terminal in an RRC inactive state, a NAS connection (or referred to as a CM connection, 5GMM connection) between the terminal and the network is in a connected state. When the terminal sends NAS signaling to the first network, an RRC connection between UE and a RAN network element of the first network is restored, and RAN paging is terminated. In a case that a CN network element of the first network receives the release indication information through NAS signaling, the connection between the terminal and the network is released or the RAN network element of the first network is notified to release the connection between the terminal and the network.

The information processing apparatus in this embodiment of this application may be an apparatus, an apparatus or an electronic device with an operating system, or may be a component, an integrated circuit, or a chip in a terminal. The apparatus or the electronic device may be a mobile terminal, or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The information processing apparatus provided in this embodiment of this application can implement the processes implemented in the method embodiment in FIG 2, and achieve a same technical effect. To avoid repetition, details are not described herein again.

FIG 8 is a second schematic structural diagram of an information processing apparatus according to an embodiment of this application. As shown in FIG 8, the information processing apparatus includes a second receiving unit 810 and a third execution unit 820.

The second receiving unit 810 is configured to receive a paging message about a terminal from a first network; and
the third execution unit 820 is configured to perform a third operation, where
the third operation includes at least one of the following:
   determining whether to perform paging rejection;
   determining whether to perform a paging acceptance response;
   determining whether to send information used for paging rejection to the first network;
   determining whether to send information used for a paging acceptance response to the first network;
   sending the information used for paging rejection to the first network; and
   sending the information used for a paging acceptance response to the first network.

In this embodiment of this application, the paging message about the terminal is received from the first network; and the third operation is performed, where the third operation includes at least one of the following: determining whether to perform paging rejection; determining whether to perform a paging acceptance response; determining whether to send information used for paging rejection to the first network; and sending the information used for paging rejection to the first network, so that the terminal can perform paging rejection or a paging reception response.

Optionally, the apparatus further includes:
a third sending unit, configured to send third information; and
the third execution unit is configured to perform the third operation according to the third information.

Optionally, the third information includes at least one of the following:
sixth indication information, where the sixth indication information performs paging rejection on the paging message;
seventh indication information, where the seventh indication information is used to indicate one of the following: performing a paging acceptance response for the paging message, initiating connection establishment, and initiating connection recovery; and
first tendency information, where
the first tendency information includes at least one of the following:
   information used to indicate to reject all paging;
   information about a first data channel, where the information about the first data channel is used to indicate to reject paging related to the first data channel;
   information used to indicate to reject paging except that a paging cause is a first value;
   information used to indicate to accept only paging except that a paging cause is a first value;
   information used to indicate to accept all paging;
   information used to indicate to accept paging whose paging cause is a first value; and
   information about a second data channel, where the information about the second data channel is used to indicate to accept paging related to the second data channel.

Optionally, the determining whether to perform paging rejection and/or the determining whether to send information used for paging rejection to the first network includes:
in a case that a ninth condition is met, determining to perform paging rejection and/or determining to send the information used for paging rejection to the first network, where
the ninth condition includes at least one of the following:
   the paging message is not accepted by first tendency information;
   the paging message is rejected by the first tendency information;
   the paging message is rejected by the sixth indication information.

Optionally, the determining whether to perform a paging acceptance response and/or the determining whether to send information used for a paging acceptance response to the first network includes:
in a case that a tenth condition is met, determining to perform a paging acceptance response and/or determining to send the information used for a paging acceptance response to the first network, where
the tenth condition includes at least one of the following:
   the paging message is accepted by first tendency information or is not rejected by first tendency information;
   the sixth indication information is not received; and
   the seventh indication information is received.

Optionally, the information used for paging rejection includes one of the following: reject paging indication information and release indication information. The release indication information is used to request a connection between the terminal and the network to enter a non-connected state. It is not difficult to understand that, for a terminal in an RRC inactive state, a NAS connection (or referred to as a CM connection, 5GMM connection) between the terminal and the network is in a connected state. When the terminal sends NAS signaling to the first network, an RRC connection between UE and a RAN network element of the first network is restored, and RAN paging is terminated. In a case that a CN network element of the first network receives the release indication information through NAS signaling, the connection between the terminal and the network is released or the RAN network element of the first network is notified to release the connection between the terminal and the network.

The information processing apparatus in this embodiment of this application may be an apparatus, an apparatus or an electronic device with an operating system, or may be a component, an integrated circuit, or a chip in a terminal. The apparatus or the electronic device may be a mobile terminal, or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The information processing apparatus provided in this embodiment of this application can implement the processes implemented in the method embodiment in FIG 3, and achieve a same technical effect. To avoid repetition, details are not described herein again.

FIG 9 is a third schematic structural diagram of an information processing apparatus according to an embodiment of this application. As shown in FIG 9, the information processing apparatus includes a third receiving unit 910 and a fourth execution unit 920.

The third receiving unit 910 is configured to receive a paging message from a first network; and
the fourth execution unit 920 is configured to perform a fourth operation based on the paging message, where
the fourth operation includes at least one of the following:
   determining whether to perform paging rejection;
   determining whether to perform a paging acceptance response;
   determining whether to initiate paging rejection through AS signaling;
   determining whether to initiate paging rejection through NAS signaling;
   sending, through AS signaling, information used for paging rejection or sending, through NAS signaling, information used for paging rejection; and
   sending, through AS signaling, information used for a paging acceptance response or sending, through NAS signaling, information used for a paging acceptance response.

In this embodiment of this application, the terminal receives the paging message from the network, and performs the fourth operation based on the paging message, so that the terminal can perform paging rejection or a paging reception response.

Optionally, the apparatus further includes:
a first obtaining unit, configured to obtain first tendency information; and
the fourth execution unit is configured to perform the fourth operation according to the first tendency information.

Optionally, the first tendency information includes at least one of the following:
information used to indicate to reject all paging;
information about a first data channel, where the information about the first data channel is used to indicate to reject paging related to the first data channel;
information used to indicate to reject paging except that a paging cause is a first value;
information used to indicate to accept only paging except that a paging cause is a first value;
information used to indicate to accept all paging;
information used to indicate to accept paging whose paging cause is a first value; and
information about a second data channel, where the information about the second data channel is used to indicate to accept paging related to the second data channel.

Optionally,
the determining whether to perform paging rejection includes:
in a case that an eleventh condition is met, determining to perform paging rejection, where
the eleventh condition includes at least one of the following:
   the paging message is not accepted by first tendency information;
   the paging message is rejected by the first tendency information;
      and/or
   the determining whether to perform a paging response includes: in a case that a twelfth condition is met, determining to perform a paging response, where
   the twelfth condition includes: the paging message is accepted by the first tendency information or is not rejected by the first tendency information.

Optionally, the determining to initiate paging rejection through AS signaling and/or the sending, through AS signaling, information used for paging rejection includes:
in a case that a thirteenth condition is met, determining to initiate paging rejection through AS signaling and/or sending, through AS signaling, the information used for paging rejection, where
the thirteenth condition includes at least one of the following:
   it is determined to perform paging rejection;
   the paging message is not accepted by first tendency information;
   the paging message is rejected by the first tendency information;
   the paging message is a paging message initiated by a RAN;
   the terminal supports an AS paging rejection function; and
   the first network supports an AS paging rejection function.

Optionally, the determining to initiate paging rejection through NAS signaling and/or the sending, through NAS signaling, information used for paging rejection includes:
in a case that a fourteenth condition is met, determining to initiate paging rejection through NAS signaling and/or sending, through NAS signaling, the information used for paging rejection, where
the fourteenth condition includes at least one of the following:
   it is determined to perform paging rejection;
   the paging message is not accepted by first tendency information;
   the paging message is rejected by the first tendency information;
   the paging message is a paging message initiated by a CN;
   the terminal supports a NAS paging rejection function;
   the first network supports a NAS paging rejection function;
   the paging message is a paging message initiated by a RAN;
   the terminal does not support an AS paging rejection function; and
   the first network does not support an AS paging rejection function.

Optionally, the determining whether to initiate a paging acceptance response through AS signaling and/or the sending, through AS signaling, information used for a paging acceptance response includes:
in a case that a fifteenth condition is met, determining to initiate a paging acceptance response through AS signaling and/or sending, through AS signaling, the information used for a paging acceptance response, where
the fifteenth condition includes at least one of the following:
   it is determined to perform a paging acceptance response;
   the paging message is accepted by first tendency information or is not rejected by first tendency information;
   the paging message is a paging message initiated by a RAN;
   the terminal is in an inactive state.

Optionally, the determining whether to initiate a paging acceptance response through NAS signaling and/or the sending, through NAS signaling, information used for a paging acceptance response includes:
in a case that a sixteenth condition is met, determining to initiate a paging acceptance response through NAS signaling and/or sending, through NAS signaling, the information used for a paging acceptance response, where
the sixteenth condition includes at least one of the following:
   it is determined to perform a paging acceptance response;
   the paging message is accepted by first tendency information or is not rejected by first tendency information;
   the paging message is a paging message initiated by a CN;
   the terminal is in an idle state;
   the paging message is a paging message initiated by a RAN;
   the terminal supports performing a paging acceptance response for RAN paging through NAS signaling;
   the first network performs a paging acceptance response for RAN paging through NAS signaling; and
   the terminal is in an inactive state.

Optionally, the information used for paging rejection includes one of the following: reject paging indication information and release indication information. The release indication information is used to request a connection between the terminal and the network to enter a non-connected state. It is not difficult to understand that, for a terminal in an RRC inactive state, a NAS connection (or referred to as a CM connection, 5GMM connection) between the terminal and the network is in a connected state. When the terminal sends NAS signaling to the first network, an RRC connection between UE and a RAN network element of the first network is restored, and RAN paging is terminated. In a case that a CN network element of the first network receives the release indication information through NAS signaling, the connection between the terminal and the network is released or the RAN network element of the first network is notified to release the connection between the terminal and the network.

The information processing apparatus in this embodiment of this application may be an apparatus, an apparatus or an electronic device with an operating system, or may be a component, an integrated circuit, or a chip in a terminal. The apparatus or the electronic device may be a mobile terminal, or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The information processing apparatus provided in this embodiment of this application can implement the processes implemented in the method embodiment in FIG 4, and achieve a same technical effect. To avoid repetition, details are not described herein again.

Optionally, as shown in FIG 10, an embodiment of this application further provides a communication device 1000, including a processor 1001, a memory 1002, and a program or an instruction that is stored in the memory 1002 and that can be run on the processor 1001. For example, when the communication device 1000 is a terminal, the program or the instruction is executed by the processor 1001 to implement the processes of the foregoing information processing method embodiment, and a same technical effect can be achieved. To avoid repetition, details are not described herein again.

An embodiment of this application further provides a terminal, including a processor and a communication interface, where the communication interface is configured to receive a paging message about the terminal from a first network; and the processor is configured to perform a first operation, where the first operation includes at least one of the following: determining paging cause information related to the terminal; and sending first information to a non-access stratum NAS of the terminal, where the first information includes at least one of the following: the paging message; paging cause information; information about the terminal in the paging message; first indication information, where the first indication information is used to indicate that the paging message is received; and type information of the paging message.

Alternatively, the communication interface is configured to receive a paging message about the terminal from a first network; and the processor is configured to perform a third operation, where the third operation includes at least one of the following: determining whether to perform paging rejection; determining whether to perform a paging acceptance response; determining whether to send information used for paging rejection to the first network; and sending the information used for paging rejection to the first network.

Alternatively, the communication interface is configured to receive a paging message from a first network; and the processor is configured to perform a fourth operation based on the paging message, where the fourth operation includes at least one of the following: determining whether to perform paging rejection; determining whether to perform a paging acceptance response; determining whether to initiate paging rejection through AS signaling; determining whether to initiate paging rejection through NAS signaling; and sending, through AS signaling, information used for paging rejection or sending, through NAS signaling, information used for paging rejection.

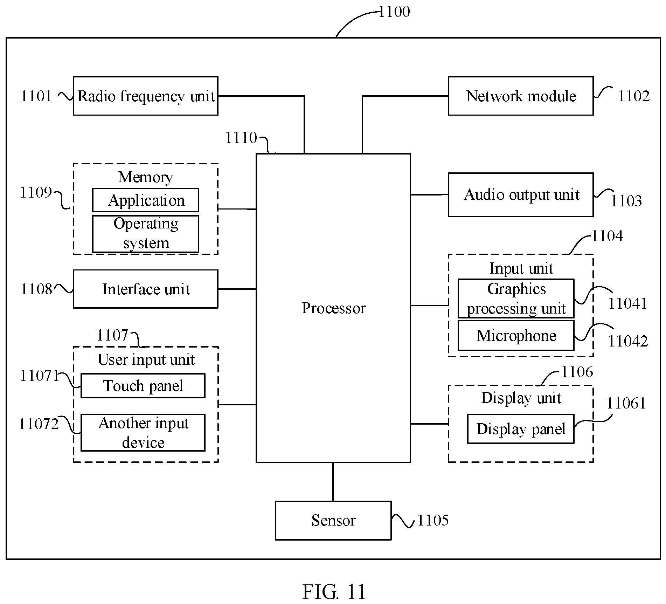

This terminal embodiment corresponds to the foregoing method embodiment on the terminal side. Each implementation process and implementation of the foregoing method embodiment may be applicable to this terminal embodiment, and a same technical effect can be achieved. Specifically, FIG 11 is a schematic structural diagram of hardware of a terminal according to an embodiment of this application.

A terminal 1100 includes but is not limited to at least a part of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art can understand that the terminal 1100 may further include a power supply (for example, a battery) that supplies power to each component. The power supply may be logically connected to the processor 1110 by using a power supply management system, to implement functions such as charging and discharging management, and power consumption management by using the power supply management system. The terminal structure shown in FIG 11 constitutes no limitation on the terminal, and the terminal may include more or fewer components than those shown in the figure, or combine some components, or have different component arrangements. Details are not described herein.

It should be understood that, in this embodiment of this application, the input unit 1104 may include a graphics processing unit (Graphics Processing Unit, GPU) 11041 and a microphone 11042, and the graphics processing unit 11041 processes image data of a still picture or a video obtained by an image capture apparatus (for example, a camera) in a video capture mode or an image capture mode. The display unit 1106 may include a display panel 11061. Optionally, the display panel 11061 may be configured in a form such as a liquid crystal display or an organic light-emitting diode. The user input unit 1107 includes a touch panel 11071 and another input device 11072. The touch panel 11071 is also referred to as a touchscreen. The touch panel 11071 may include two parts: a touch detection apparatus and a touch controller. The another input device 11072 may include but is not limited to a physical keyboard, a functional button (for example, a volume control button or a power on/off button), a trackball, a mouse, and a joystick. Details are not described herein.

In this embodiment of this application, the radio frequency unit 1101 receives downlink data from a network side device and then sends the downlink data to the processor 1110 for processing; and sends uplink data to the network side device. Usually, the radio frequency unit 1101 includes but is not limited to an antenna, at least one amplifier, a transceiver, a coupler, a low noise amplifier, a duplexer, and the like.

The memory 1109 may be configured to store a software program or an instruction and various data. The memory 1109 may mainly include a program or instruction storage area and a data storage area. The program or instruction storage area may store an operating system, and an application or an instruction required by at least one function (for example, a sound playing function or an image playing function). In addition, the memory 1109 may include a high-speed random access memory, and may further include a non-volatile memory. The non-volatile memory may be a read-only memory (Read-only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 1110 may include one or more processing units. Optionally, an application processor and a modem processor may be integrated into the processor 1110. The application processor mainly processes an operating system, a user interface, an application, an instruction, or the like. The modem processor mainly processes wireless communication, for example, a baseband processor. It can be understood that, alternatively, the modem processor may not be integrated into the processor 1110.

The radio frequency unit 1101 is configured to receive a paging message about the terminal from a first network; and
the processor 1110 is configured to perform a first operation, where
the first operation includes at least one of the following:
   determining paging cause information related to the terminal; and
   sending first information to a non-access stratum NAS of the terminal, where
   the first information includes at least one of the following:
      the paging message;
      paging cause information;
      information about the terminal in the paging message;
      first indication information, where the first indication information is used to indicate that the paging message is received; and
      type information of the paging message.

In this embodiment of this application, the paging message about the terminal is received from the first network; and the terminal performs the first operation, where the first operation includes at least one of the following: determining the paging cause information related to the terminal; and sending the first information to the non-access stratum NAS of the terminal, where the first information includes at least one of the following: the paging message; the paging cause information; information about the terminal in the paging message; the first indication information, where the first indication information is used to indicate that the paging message is received; and the type information of the paging message, so that the terminal can perform paging rejection or a paging reception response.

Optionally, the information about the terminal in the paging message includes at least one of the following:
the paging cause information related to the terminal; and
a user identifier of the terminal;
   and/or
the paging cause information in the first information includes at least one of the following: paging cause information in the paging message, and the determined paging cause information related to the terminal.

Optionally, the paging cause information includes at least one of the following:
information used to indicate that a paging cause is a first value;
information used to indicate that a paging cause is a second value; and
information used to indicate that a paging cause is unknown.

Optionally, the paging message includes at least one of the following:
a paging message initiated by a core network CN; and
a paging message initiated by a radio access network RAN;
   and/or
the type information of the paging message includes at least one of the following:
   a paging message initiated by a CN; and
   a paging message initiated by a RAN.

Optionally, the radio frequency unit 1101 is further configured to send second information; and
the processor 1110 is further configured to perform, by the AS of the terminal, the first operation according to the second information.

Optionally, the performing, by the AS of the terminal, the first operation according to the second information includes:
in a case that the paging message is a paging message initiated by a RAN, performing, by the AS of the terminal, the first operation according to the second information.

Optionally, the second information includes at least one of the following:
paging cause capability information of the first network;
paging rejection capability information of the first network;
second indication information;
third indication information;
information used to request paging cause information; and
information used to request the paging message initiated by the RAN,
where
the paging cause capability information of the first network includes one of the following: the network supports a paging cause function, and the network does not support a paging cause function;
the paging rejection capability information of the first network includes one of the following: the network supports a paging rejection function, and the network does not support a paging rejection function;
the second indication information is used to indicate one of the following: the terminal is in a multi-SIM mode, and the terminal is in a non-multi-SIM mode; and
the third indication information is used to indicate one of the following: an operation of determining a paging cause needs to be performed, and an operation of determining a paging cause does not need to be performed.

Optionally, in a case that it is determined that a first condition is met, the NAS of the terminal sends the second information to the AS of the terminal, where
the first condition includes at least one of the following:
the first network supports a paging cause function;
the first network supports a paging rejection function;
the terminal supports a paging cause function;
the terminal supports a paging rejection function;
the terminal is in a multi-SIM mode;
the terminal has first tendency information; and
the terminal is in an inactive state.

Optionally, the performing, by the AS of the terminal, a first operation includes:
in a case that it is determined that a second condition is met, performing, by the AS of the terminal, the first operation, where
the second condition includes at least one of the following:
   the paging message includes paging cause information or can determine the paging cause information related to the terminal;
   the paging cause information does not include a paging cause whose value is unknown;
   the paging message is a paging message initiated by a RAN;
   the terminal supports a paging cause function;
   the terminal supports a paging rejection function;
   the terminal is in a multi-SIM mode;
   third indication information is received, where the third indication information indicates that an operation of determining a paging cause needs to be performed;
   information used to request paging cause information is received;
   information used to request a RAN paging message is received;
   the paging cause information is related to the terminal;
   the first network supports a paging rejection function or an AS paging rejection function; and
   the terminal is in an inactive state.

Optionally, the processor 1110 is further configured to perform a second operation according to the first information and/or first tendency information, where
the second operation includes at least one of the following:
determining whether to perform a paging acceptance response;
determining whether to perform paging rejection;
determining whether to initiate paging rejection through AS signaling;
determining whether to initiate paging rejection through NAS signaling;
determining whether to send fourth indication information to the AS of the terminal;
determining whether to send fifth indication information to the AS of the terminal;
sending, through NAS signaling, information used for a paging acceptance response;
sending, through NAS signaling, information used for paging rejection;
sending the fourth indication information to the AS of the terminal; and
sending the fifth indication information to the AS of the terminal,
where
the fourth indication information is used to indicate to perform paging rejection on the paging message; and
the fifth indication information is used to indicate one of the following: performing a paging acceptance response for the paging message, initiating connection establishment, and initiating connection recovery; and
the first tendency information includes at least one of the following:
   information used to indicate to reject all paging;
   information about a first data channel, where the information about the first data channel is used to indicate to reject paging related to the first data channel;
   information used to indicate to reject paging except that a paging cause is a first value;
   information used to indicate to accept only paging except that a paging cause is a first value;
   information used to indicate to accept all paging;
   information used to indicate to accept paging whose paging cause is a first value; and
   information about a second data channel, where the information about the second data channel is used to indicate to accept paging related to the second data channel.

Optionally, the determining whether to perform paging rejection includes: in a case that a third condition is met, determining to perform paging rejection, where
the third condition includes at least one of the following:
the paging message is not accepted by first tendency information;
the paging message is rejected by the first tendency information; and
the paging message is rejected by the fourth indication information;
   and/or
the determining whether to perform a paging response includes: in a case that a fourth condition is met, determining to perform a paging response, where
the fourth condition includes: the paging message is accepted by the first tendency information or is not rejected by the first tendency information.

Optionally, the determining whether to initiate paging rejection through AS signaling and/or the determining whether to send fourth indication information to the AS of the terminal includes:
in a case that a fifth condition is met, determining to initiate paging rejection through AS signaling and/or determining to send the fourth indication information to the AS of the terminal, where
the fifth condition includes at least one of the following:
   it is determined to perform paging rejection;
   the paging message is not accepted by first tendency information;
   the paging message is rejected by the first tendency information;
   the paging message is a paging message initiated by a RAN;
   the terminal supports an AS paging rejection function; and
   the first network supports an AS paging rejection function; and
   the terminal is in an inactive state.

Optionally, the determining whether to initiate paging rejection through NAS signaling and/or the sending, through NAS signaling, information used for paging rejection includes:
in a case that a sixth condition is met, determining to initiate paging rejection through NAS signaling and/or sending, through NAS signaling, the information used for paging rejection, where
the sixth condition includes at least one of the following:
   it is determined to perform paging rejection;
   the paging message is not accepted by first tendency information;
   the paging message is rejected by the first tendency information;
   the paging message is a paging message initiated by a CN;
   the terminal supports a NAS paging rejection function;
   the first network supports a NAS paging rejection function;
   the terminal is in an idle state;
   the paging message is a paging message initiated by a RAN;
   the terminal does not support an AS paging rejection function; and
   the first network does not support an AS paging rejection function; and
   the terminal is in an inactive state.

Optionally, the determining whether to initiate a paging acceptance response through AS signaling and/or the determining whether to send fifth indication information to the AS of the terminal includes:
in a case that a seventh condition is met, determining to initiate a paging acceptance response through AS signaling and/or determining whether to send the fifth indication information to the AS of the terminal, where
the seventh condition includes at least one of the following:
   it is determined to perform a paging acceptance response;
   the paging message is accepted by first tendency information or is not rejected by first tendency information;
   the paging message is a paging message initiated by a RAN;
   the terminal is in an inactive state.

Optionally, the determining whether to initiate a paging acceptance response through NAS signaling and/or the sending, through NAS signaling, information used for a paging acceptance response includes:
in a case that an eighth condition is met, determining to initiate a paging acceptance response through NAS signaling and/or sending, through NAS signaling, the information used for a paging acceptance response, where
the eighth condition includes at least one of the following:
   it is determined to perform a paging acceptance response;
   the paging message is accepted by first tendency information or is not rejected by first tendency information;
   the paging message is a paging message initiated by a CN;
   the terminal is in an idle state;
   the paging message is a paging message initiated by a RAN;
   the terminal supports performing a paging acceptance response for RAN paging through NAS signaling;
   the first network performs a paging acceptance response for RAN paging through NAS signaling; and
   the terminal is in an inactive state.

Optionally, the radio frequency unit 1101 is further configured to:
send information used for paging rejection to the first network according to the fourth indication information;
   and/or
send related information used for paging acceptance to the first network according to the fifth indication information.

In some other optional embodiments, the radio frequency unit 1101 is configured to receive a paging message about the terminal from a first network; and
the processor 1110 is configured to perform a third operation, where
the third operation includes at least one of the following:
   determining whether to perform paging rejection;
   determining whether to perform a paging acceptance response;
   determining whether to send information used for paging rejection to the first network;
   determining whether to send information used for a paging acceptance response to the first network;
   sending the information used for paging rejection to the first network; and
   sending the information used for a paging acceptance response to the first network.

Optionally, the radio frequency unit 1101 is further configured to:
send third information; and
the processor 1110 is further configured to:
   perform the third operation according to the third information.

Optionally, the third information includes at least one of the following:
sixth indication information, where the sixth indication information performs paging rejection on the paging message;
seventh indication information, where the seventh indication information is used to indicate one of the following: performing a paging acceptance response for the paging message, initiating connection establishment, and initiating connection recovery; and
first tendency information, where
the first tendency information includes at least one of the following:
   information used to indicate to reject all paging;
   information about a first data channel, where the information about the first data channel is used to indicate to reject paging related to the first data channel;
   information used to indicate to reject paging except that a paging cause is a first value;
   information used to indicate to accept only paging except that a paging cause is a first value;
   information used to indicate to accept all paging;
   information used to indicate to accept paging whose paging cause is a first value; and
   information about a second data channel, where the information about the second data channel is used to indicate to accept paging related to the second data channel.

Optionally, the determining whether to perform paging rejection and/or the determining whether to send information used for paging rejection to the first network includes:
in a case that a ninth condition is met, determining to perform paging rejection and/or determining to send the information used for paging rejection to the first network, where
the ninth condition includes at least one of the following:
   the paging message is not accepted by first tendency information;
   the paging message is rejected by the first tendency information;
   the paging message is rejected by the sixth indication information.

Optionally, the determining whether to perform a paging acceptance response and/or the determining whether to send information used for a paging acceptance response to the first network includes:
in a case that a tenth condition is met, determining to perform a paging acceptance response and/or determining to send the information used for a paging acceptance response to the first network, where
the tenth condition includes at least one of the following:
   the paging message is accepted by first tendency information or is not rejected by first tendency information;
   the sixth indication information is not received; and
   the seventh indication information is received.

In some other possible embodiments, the radio frequency unit 1101 is configured to:
receive a paging message from a first network; and
the processor 1110 is configured to perform a fourth operation based on the paging message, where
the fourth operation includes at least one of the following:
   determining whether to perform paging rejection;
   determining whether to perform a paging acceptance response;
   determining whether to initiate paging rejection through AS signaling;
   determining whether to initiate paging rejection through NAS signaling;
   sending, through AS signaling, information used for paging rejection or sending, through NAS signaling, information used for paging rejection; and
   sending, through AS signaling, information used for a paging acceptance response or sending, through NAS signaling, information used for a paging acceptance response.

Optionally, the processor 1110 is further configured to:
obtain first tendency information; and
the performing a fourth operation includes:
   performing the fourth operation according to the first tendency information.

Optionally, the first tendency information includes at least one of the following:
information used to indicate to reject all paging;
information about a first data channel, where the information about the first data channel is used to indicate to reject paging related to the first data channel;
information used to indicate to reject paging except that a paging cause is a first value;
information used to indicate to accept only paging except that a paging cause is a first value;
information used to indicate to accept all paging;
information used to indicate to accept paging whose paging cause is a first value; and
information about a second data channel, where the information about the second data channel is used to indicate to accept paging related to the second data channel.

Optionally, the determining whether to perform paging rejection includes:
in a case that an eleventh condition is met, determining to perform paging rejection, where
the eleventh condition includes at least one of the following:
   the paging message is not accepted by first tendency information;
   the paging message is rejected by the first tendency information;
      and/or
   the determining whether to perform a paging response includes: in a case that a twelfth condition is met, determining to perform a paging response, where
   the twelfth condition includes: the paging message is accepted by the first tendency information or is not rejected by the first tendency information.

Optionally, the determining to initiate paging rejection through AS signaling and/or the sending, through AS signaling, information used for paging rejection includes:
in a case that a thirteenth condition is met, determining to initiate paging rejection through AS signaling and/or sending, through AS signaling, the information used for paging rejection, where
the thirteenth condition includes at least one of the following:
   it is determined to perform paging rejection;
   the paging message is not accepted by first tendency information;
   the paging message is rejected by the first tendency information;
   the paging message is a paging message initiated by a RAN;
   the terminal supports an AS paging rejection function; and
   the first network supports an AS paging rejection function.

Optionally, the determining to initiate paging rejection through NAS signaling and/or the sending, through NAS signaling, information used for paging rejection includes:
in a case that a fourteenth condition is met, determining to initiate paging rejection through NAS signaling and/or sending, through NAS signaling, the information used for paging rejection, where
the fourteenth condition includes at least one of the following:
   it is determined to perform paging rejection;
   the paging message is not accepted by first tendency information;
   the paging message is rejected by the first tendency information;
   the paging message is a paging message initiated by a CN;
   the terminal supports a NAS paging rejection function;
   the first network supports a NAS paging rejection function;
   the paging message is a paging message initiated by a RAN;
   the terminal does not support an AS paging rejection function; and
   the first network does not support an AS paging rejection function.

Optionally, the determining whether to initiate a paging acceptance response through AS signaling and/or the sending, through AS signaling, information used for a paging acceptance response includes:
in a case that a fifteenth condition is met, determining to initiate a paging acceptance response through AS signaling and/or sending, through AS signaling, the information used for a paging acceptance response, where
the fifteenth condition includes at least one of the following:
   it is determined to perform a paging acceptance response;
   the paging message is accepted by first tendency information or is not rejected by first tendency information;
   the paging message is a paging message initiated by a RAN;
   the terminal is in an inactive state.

Optionally, the determining whether to initiate a paging acceptance response through NAS signaling and/or the sending, through NAS signaling, information used for a paging acceptance response includes:
in a case that a sixteenth condition is met, determining to initiate a paging acceptance response through NAS signaling and/or sending, through NAS signaling, the information used for a paging acceptance response, where
the sixteenth condition includes at least one of the following:
it is determined to perform a paging acceptance response;
the paging message is accepted by first tendency information or is not rejected by first tendency information;
the paging message is a paging message initiated by a CN;
the terminal is in an idle state;
the paging message is a paging message initiated by a RAN;
the terminal supports performing a paging acceptance response for RAN paging through NAS signaling;
the first network performs a paging acceptance response for RAN paging through NAS signaling; and
the terminal is in an inactive state.

Optionally, the information used for paging rejection includes one of the following: reject paging indication information and release indication information. The release indication information is used to request a connection between the terminal and the network to enter a non-connected state. It is not difficult to understand that, for a terminal in an RRC inactive state, a NAS connection (or referred to as a CM connection, 5GMM connection) between the terminal and the network is in a connected state. When the terminal sends NAS signaling to the first network, an RRC connection between UE and a RAN network element of the first network is restored, and RAN paging is terminated. In a case that a CN network element of the first network receives the release indication information through NAS signaling, the connection between the terminal and the network is released or the RAN network element of the first network is notified to release the connection between the terminal and the network.

An embodiment of this application further provides a readable storage medium. The readable storage medium stores a program or an instruction, and when the program or the instruction is executed by a processor, the processes of the foregoing information processing method embodiment are implemented and a same technical effect can be achieved. To avoid repetition, details are not described herein again.

The processor is a processor in the terminal in the foregoing embodiment. The readable storage medium includes a computer-readable storage medium, such as a computer read-only memory (Read-only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to run a program or an instruction to implement the processes of the foregoing information processing method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (for example, a ROM/RAM, a hard disk, or an optical disc), and includes several instructions for instructing a terminal (which may be mobile phone, a computer, a server, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. An information processing method, comprising:
receiving, by an access stratum AS of a terminal, a paging message about the terminal from a first network; and
performing, by the AS of the terminal, a first operation, wherein
the first operation comprises at least one of the following:
determining paging cause information related to the terminal; and
sending first information to a non-access stratum NAS of the terminal, wherein
the first information comprises at least one of the following:
the paging message;
paging cause information;
information about the terminal in the paging message;
first indication information, wherein the first indication information is used to indicate that the paging message is received; and
type information of the paging message.

2. The information processing method according to claim 1, wherein the information about the terminal in the paging message comprises at least one of the following:
the paging cause information related to the terminal; and
a user identifier of the terminal;
and/or
the paging cause information in the first information comprises at least one of the following: paging cause information in the paging message, and the determined paging cause information related to the terminal.

3. The information processing method according to claim 1 or 2, wherein the paging cause information comprises at least one of the following:
information used to indicate that a paging cause is a first value;
information used to indicate that a paging cause is a second value; and
information used to indicate that a paging cause is unknown.

4. The information processing method according to claim 1, wherein the paging message comprises at least one of the following:
a paging message initiated by a core network CN; and
a paging message initiated by a radio access network RAN;
and/or
the type information of the paging message comprises at least one of the following:
a paging message initiated by a CN; and
a paging message initiated by a RAN.

5. The information processing method according to claim 1, wherein before the performing, by the AS of the terminal, a first operation, the method further comprises:
sending, by the NAS of the terminal, second information to the AS of the terminal; and
the performing, by the AS of the terminal, a first operation comprises:
performing, by the AS of the terminal, the first operation according to the second information.

6. The information processing method according to claim 5, wherein the performing, by the AS of the terminal, the first operation according to the second information comprises:
in a case that the paging message is a paging message initiated by a RAN, performing, by the AS of the terminal, the first operation according to the second information.

7. The information processing method according to claim 5 or 6, wherein the second information comprises at least one of the following:
paging cause capability information of the first network;
paging rejection capability information of the first network;
second indication information;
third indication information;
information used to request paging cause information; and
information used to request the paging message initiated by the RAN,
wherein
the paging cause capability information of the first network comprises one of the following: the network supports a paging cause function, and the network does not support a paging cause function;
the paging rejection capability information of the first network comprises one of the following: the network supports a paging rejection function, and the network does not support a paging rejection function;
the second indication information is used to indicate one of the following: the terminal is in a multi-SIM mode, and the terminal is in a non-multi-SIM mode; and
the third indication information is used to indicate one of the following: an operation of determining a paging cause needs to be performed, and an operation of determining a paging cause does not need to be performed.

8. The information processing method according to claim 5, wherein the sending, by the NAS of the terminal, second information to the AS of the terminal comprises:
in a case that it is determined that a first condition is met, sending, by the NAS of the terminal, the second information to the AS of the terminal, wherein
the first condition comprises at least one of the following:
the first network supports a paging cause function;
the first network supports a paging rejection function;
the terminal supports a paging cause function;
the terminal supports a paging rejection function;
the terminal is in a multi-SIM mode;
the terminal has first tendency information; and
the terminal is in an inactive state.

9. The information processing method according to claim 1 or 5, wherein the performing, by the AS of the terminal, a first operation comprises:
in a case that it is determined that a second condition is met, performing, by the AS of the terminal, the first operation, wherein
the second condition comprises at least one of the following:
the paging message comprises paging cause information or can determine the paging cause information related to the terminal;
the paging cause information does not comprise a paging cause whose value is unknown;
the paging message is a paging message initiated by a RAN;
the terminal supports a paging cause function;
the terminal supports a paging rejection function;
the terminal is in a multi-SIM mode;
third indication information is received, wherein the third indication information indicates that an operation of determining a paging cause needs to be performed;
information used to request paging cause information is received;
information used to request a RAN paging message is received;
the paging cause information is related to the terminal;
the first network supports a paging rejection function or an AS paging rejection function; and
the terminal is in an inactive state.

10. The information processing method according to claim 1, wherein after the performing, by the AS of the terminal, a first operation, the method further comprises:
performing, by the NAS of the terminal, a second operation according to the first information and/or first tendency information, wherein
the second operation comprises at least one of the following:
determining whether to perform a paging acceptance response;
determining whether to perform paging rejection;
determining whether to initiate paging rejection through AS signaling;
determining whether to initiate paging rejection through NAS signaling;
determining whether to send fourth indication information to the AS of the terminal;
determining whether to send fifth indication information to the AS of the terminal;
sending, through NAS signaling, information used for a paging acceptance response;
sending, through NAS signaling, information used for paging rejection;
sending the fourth indication information to the AS of the terminal; and
sending the fifth indication information to the AS of the terminal,
wherein
the fourth indication information is used to indicate to perform paging rejection on the paging message; and
the fifth indication information is used to indicate one of the following: performing a paging acceptance response for the paging message, initiating connection establishment, and initiating connection recovery; and
the first tendency information comprises at least one of the following:
information used to indicate to reject all paging;
information about a first data channel, wherein the information about the first data channel is used to indicate to reject paging related to the first data channel;
information used to indicate to reject paging except that a paging cause is a first value;
information used to indicate to accept only paging except that a paging cause is a first value;
information used to indicate to accept all paging;
information used to indicate to accept paging whose paging cause is a first value; and
information about a second data channel, wherein the information about the second data channel is used to indicate to accept paging related to the second data channel.

11. The information processing method according to claim 10, wherein the determining whether to perform paging rejection comprises: in a case that a third condition is met, determining to perform paging rejection, wherein
the third condition comprises at least one of the following:
the paging message is not accepted by the first tendency information;
the paging message is rejected by the first tendency information; and
the paging message is rejected by the fourth indication information;
and/or
the determining whether to perform a paging response comprises: in a case that a fourth condition is met, determining to perform a paging response, wherein
the fourth condition comprises: the paging message is accepted by the first tendency information or is not rejected by the first tendency information.

12. The information processing method according to claim 10, wherein the determining whether to initiate paging rejection through AS signaling and/or the determining whether to send fourth indication information to the AS of the terminal comprises:
in a case that a fifth condition is met, determining to initiate paging rejection through AS signaling and/or determining to send the fourth indication information to the AS of the terminal, wherein
the fifth condition comprises at least one of the following:
it is determined to perform paging rejection;
the paging message is not accepted by the first tendency information;
the paging message is rejected by the first tendency information;
the paging message is a paging message initiated by a RAN;
the terminal supports an AS paging rejection function;
the first network supports an AS paging rejection function; and
the terminal is in an inactive state.

13. The information processing method according to claim 10, wherein the determining whether to initiate paging rejection through NAS signaling and/or the sending, through NAS signaling, information used for paging rejection comprises:
in a case that a sixth condition is met, determining to initiate paging rejection through NAS signaling and/or sending, through NAS signaling, the information used for paging rejection, wherein
the sixth condition comprises at least one of the following:
it is determined to perform paging rejection;
the paging message is not accepted by the first tendency information;
the paging message is rejected by the first tendency information;
the paging message is a paging message initiated by a CN;
the terminal supports a NAS paging rejection function;
the first network supports a NAS paging rejection function;
the terminal is in an idle state;
the paging message is a paging message initiated by a RAN;
the terminal does not support an AS paging rejection function;
the first network does not support an AS paging rejection function; and
the terminal is in an inactive state.

14. The information processing method according to claim 10, wherein the determining whether to initiate a paging acceptance response through AS signaling and/or the determining whether to send fifth indication information to the AS of the terminal comprises:
in a case that a seventh condition is met, determining to initiate a paging acceptance response through AS signaling and/or determining whether to send the fifth indication information to the AS of the terminal, wherein
the seventh condition comprises at least one of the following:
it is determined to perform a paging acceptance response;
the paging message is accepted by the first tendency information or is not rejected by the first tendency information;
the paging message is a paging message initiated by a RAN; and
the terminal is in an inactive state.

15. The information processing method according to claim 10, wherein the determining whether to initiate a paging acceptance response through NAS signaling and/or the sending, through NAS signaling, information used for a paging acceptance response comprises:
in a case that an eighth condition is met, determining to initiate a paging acceptance response through NAS signaling and/or sending, through NAS signaling, the information used for a paging acceptance response, wherein
the eighth condition comprises at least one of the following:
it is determined to perform a paging acceptance response;
the paging message is accepted by the first tendency information or is not rejected by the first tendency information;
the paging message is a paging message initiated by a CN;
the terminal is in an idle state;
the paging message is a paging message initiated by a RAN;
the terminal supports performing a paging acceptance response for RAN paging through NAS signaling;
the first network performs a paging acceptance response for RAN paging through NAS signaling; and
the terminal is in an inactive state.

16. The information processing method according to claim 10, wherein after the sending the fourth indication information to the AS of the terminal, the method further comprises:
sending, by the AS of the terminal, information used for paging rejection to the first network according to the fourth indication information;
and/or
after the sending the fifth indication information to the AS of the terminal, the method further comprises:
sending, by the AS of the terminal, related information used for paging acceptance to the first network according to the fifth indication information.

17. The information processing method according to claim 10, wherein the information used for paging rejection comprises one of the following: reject paging indication information and release indication information.

18. An information processing method, comprising:
receiving, by an access stratum AS of a terminal, a paging message about the terminal from a first network; and
performing, by the AS of the terminal, a third operation, wherein
the third operation comprises at least one of the following:
determining whether to perform paging rejection;
determining whether to perform a paging acceptance response;
determining whether to send information used for paging rejection to the first network;
determining whether to send information used for a paging acceptance response to the first network;
sending the information used for paging rejection to the first network; and
sending the information used for a paging acceptance response to the first network.

19. The information processing method according to claim 18, wherein before the performing, by the AS of the terminal, a third operation, the method further comprises:
sending, by a NAS of the terminal, third information to the AS of the terminal; and
the performing, by the AS of the terminal, a third operation comprises:
performing, by the AS of the terminal, the third operation according to the third information.

20. The information processing method according to claim 19, wherein the third information comprises at least one of the following:
sixth indication information, wherein the sixth indication information performs paging rejection on the paging message;
seventh indication information, wherein the seventh indication information is used to indicate one of the following: performing a paging acceptance response for the paging message, initiating connection establishment, and initiating connection recovery; and
first tendency information, wherein
the first tendency information comprises at least one of the following:
information used to indicate to reject all paging;
information about a first data channel, wherein the information about the first data channel is used to indicate to reject paging related to the first data channel;
information used to indicate to reject paging except that a paging cause is a first value;
information used to indicate to accept only paging except that a paging cause is a first value;
information used to indicate to accept all paging;
information used to indicate to accept paging whose paging cause is a first value; and
information about a second data channel, wherein the information about the second data channel is used to indicate to accept paging related to the second data channel.

21. The information processing method according to claim 20, wherein the determining whether to perform paging rejection and/or the determining whether to send information used for paging rejection to the first network comprises:
in a case that a ninth condition is met, determining to perform paging rejection and/or determining to send the information used for paging rejection to the first network, wherein
the ninth condition comprises at least one of the following:
the paging message is not accepted by the first tendency information;
the paging message is rejected by the first tendency information; and
the paging message is rejected by the sixth indication information.

22. The information processing method according to claim 20, wherein the determining whether to perform a paging acceptance response and/or the determining whether to send information used for a paging acceptance response to the first network comprises:
in a case that a tenth condition is met, determining to perform a paging acceptance response and/or determining to send the information used for a paging acceptance response to the first network, wherein
the tenth condition comprises at least one of the following:
the paging message is accepted by the first tendency information or is not rejected by the first tendency information;
the sixth indication information is not received; and
the seventh indication information is received.

23. The information processing method according to claim 18, wherein the information used for paging rejection comprises one of the following: reject paging indication information and release indication information.

24. An information processing method, comprising:
receiving a paging message from a first network; and
performing a fourth operation based on the paging message, wherein
the fourth operation comprises at least one of the following:
determining whether to perform paging rejection;
determining whether to perform a paging acceptance response;
determining whether to initiate paging rejection through AS signaling;
determining whether to initiate paging rejection through NAS signaling;
sending, through AS signaling, information used for paging rejection or sending, through NAS signaling, information used for paging rejection; and
sending, through AS signaling, information used for a paging acceptance response or sending, through NAS signaling, information used for a paging acceptance response.

25. The information processing method according to claim 24, wherein before the performing a fourth operation, the method further comprises:
obtaining first tendency information; and
the performing a fourth operation comprises:
performing the fourth operation according to the first tendency information.

26. The information processing method according to claim 25, wherein the first tendency information comprises at least one of the following:
information used to indicate to reject all paging;
information about a first data channel, wherein the information about the first data channel is used to indicate to reject paging related to the first data channel;
information used to indicate to reject paging except that a paging cause is a first value;
information used to indicate to accept only paging except that a paging cause is a first value;
information used to indicate to accept all paging;
information used to indicate to accept paging whose paging cause is a first value; and
information about a second data channel, wherein the information about the second data channel is used to indicate to accept paging related to the second data channel.

27. The information processing method according to claim 24, wherein the determining whether to perform paging rejection comprises:
in a case that an eleventh condition is met, determining to perform paging rejection, wherein
the eleventh condition comprises at least one of the following:
the paging message is not accepted by first tendency information; and
the paging message is rejected by the first tendency information;
and/or
the determining whether to perform a paging response comprises: in a case that a twelfth condition is met, determining to perform a paging response, wherein
the twelfth condition comprises: the paging message is accepted by the first tendency information or is not rejected by the first tendency information.

28. The information processing method according to claim 24, wherein the determining to initiate paging rejection through AS signaling and/or the sending, through AS signaling, information used for paging rejection comprises:
in a case that a thirteenth condition is met, determining to initiate paging rejection through AS signaling and/or sending, through AS signaling, the information used for paging rejection, wherein
the thirteenth condition comprises at least one of the following:
it is determined to perform paging rejection;
the paging message is not accepted by first tendency information;
the paging message is rejected by the first tendency information;
the paging message is a paging message initiated by a RAN;
the terminal supports an AS paging rejection function; and
the first network supports an AS paging rejection function.

29. The information processing method according to claim 24, wherein the determining to initiate paging rejection through NAS signaling and/or the sending, through NAS signaling, information used for paging rejection comprises:
in a case that a fourteenth condition is met, determining to initiate paging rejection through NAS signaling and/or sending, through NAS signaling, the information used for paging rejection, wherein
the fourteenth condition comprises at least one of the following:
it is determined to perform paging rejection;
the paging message is not accepted by first tendency information;
the paging message is rejected by the first tendency information;
the paging message is a paging message initiated by a CN;
the terminal supports a NAS paging rejection function;
the first network supports a NAS paging rejection function;
the paging message is a paging message initiated by a RAN;
the terminal does not support an AS paging rejection function; and
the first network does not support an AS paging rejection function.

30. The information processing method according to claim 24, wherein the determining whether to initiate a paging acceptance response through AS signaling and/or the sending, through AS signaling, information used for a paging acceptance response comprises:
in a case that a fifteenth condition is met, determining to initiate a paging acceptance response through AS signaling and/or sending, through AS signaling, the information used for a paging acceptance response, wherein
the fifteenth condition comprises at least one of the following:
it is determined to perform a paging acceptance response;
the paging message is accepted by first tendency information or is not rejected by first tendency information;
the paging message is a paging message initiated by a RAN; and
the terminal is in an inactive state.

31. The information processing method according to claim 24, wherein the determining whether to initiate a paging acceptance response through NAS signaling and/or the sending, through NAS signaling, information used for a paging acceptance response comprises:
in a case that a sixteenth condition is met, determining to initiate a paging acceptance response through NAS signaling and/or sending, through NAS signaling, the information used for a paging acceptance response, wherein
the sixteenth condition comprises at least one of the following:
it is determined to perform a paging acceptance response;
the paging message is accepted by first tendency information or is not rejected by first tendency information;
the paging message is a paging message initiated by a CN;
the terminal is in an idle state;
the paging message is a paging message initiated by a RAN;
the terminal supports performing a paging acceptance response for RAN paging through NAS signaling;
the first network performs a paging acceptance response for RAN paging through NAS signaling; and
the terminal is in an inactive state.

32. The information processing method according to claim 24, wherein the information used for paging rejection comprises one of the following: reject paging indication information and release indication information.

33. An information processing apparatus, comprising:
a first receiving unit, configured to receive a paging message about a terminal from a first network; and
a first execution unit, configured to perform a first operation, wherein
the first operation comprises at least one of the following:
determining paging cause information related to the terminal; and
sending first information to a non-access stratum NAS of the terminal, wherein
wherein
the first information comprises at least one of the following:
the paging message;
paging cause information;
information about the terminal in the paging message;
first indication information, wherein the first indication information is used to indicate that the paging message is received; and
type information of the paging message.

34. The information processing apparatus according to claim 33, wherein the apparatus further comprises:
a first sending unit, configured to send second information; and
the first execution unit is configured to perform the first operation according to the second information.

35. The information processing apparatus according to claim 34, wherein the first sending unit is configured to:
in a case that a first condition is met, send the second information, wherein
the first condition comprises at least one of the following:
the first network supports a paging cause function;
the first network supports a paging rejection function;
the terminal supports a paging cause function;
the terminal supports a paging rejection function;
the terminal is in a multi-SIM mode;
the terminal has first tendency information; and
the terminal is in an inactive state.

36. The information processing apparatus according to claim 33 or 34, wherein the first execution unit is configured to:
in a case that it is determined that a second condition is met, perform the first operation, wherein
the second condition comprises at least one of the following:
the paging message comprises paging cause information or can determine the paging cause information related to the terminal;
the paging cause information does not comprise a paging cause whose value is unknown;
the paging message is a paging message initiated by a RAN;
the terminal supports a paging cause function;
the terminal supports a paging rejection function;
the terminal is in a multi-SIM mode;
third indication information is received, wherein the third indication information indicates that an operation of determining a paging cause needs to be performed;
information used to request paging cause information is received;
information used to request a RAN paging message is received;
the paging cause information is related to the terminal;
the first network supports a paging rejection function or an AS paging rejection function; and
the terminal is in an inactive state.

37. The information processing apparatus according to claim 33, wherein the apparatus further comprises:
a second execution unit, configured to perform a second operation according to the first information and/or first tendency information, wherein
the second operation comprises at least one of the following:
determining whether to perform a paging acceptance response;
determining whether to perform paging rejection;
determining whether to initiate paging rejection through AS signaling;
determining whether to initiate paging rejection through NAS signaling;
determining whether to send fourth indication information to the AS of the terminal;
determining whether to send fifth indication information to the AS of the terminal;
sending, through NAS signaling, information used for a paging acceptance response;
sending, through NAS signaling, information used for paging rejection;
sending the fourth indication information to the AS of the terminal; and
sending the fifth indication information to the AS of the terminal,
wherein
the fourth indication information is used to indicate to perform paging rejection on the paging message; and
the fifth indication information is used to indicate one of the following: performing a paging acceptance response for the paging message, initiating connection establishment, and initiating connection recovery; and
the first tendency information comprises at least one of the following:
information used to indicate to reject all paging;
information about a first data channel, wherein the information about the first data channel is used to indicate to reject paging related to the first data channel;
information used to indicate to reject paging except that a paging cause is a first value;
information used to indicate to accept only paging except that a paging cause is a first value;
information used to indicate to accept all paging;
information used to indicate to accept paging whose paging cause is a first value; and
information about a second data channel, wherein the information about the second data channel is used to indicate to accept paging related to the second data channel.

38. The information processing apparatus according to claim 37, wherein the apparatus further comprises:
a second sending unit, configured to send information used for paging rejection to the first network according to the fourth indication information;
and/or
a third sending unit, configured to send related information used for paging acceptance to the first network according to the fifth indication information.

39. The information processing apparatus according to claim 37, wherein the information used for paging rejection comprises one of the following: reject paging indication information and release indication information.

40. An information processing apparatus, comprising:
a second receiving unit, configured to receive a paging message about a terminal from a first network; and
a third execution unit, configured to perform a third operation, wherein
the third operation comprises at least one of the following:
determining whether to perform paging rejection;
determining whether to perform a paging acceptance response;
determining whether to send information used for paging rejection to the first network;
determining whether to send information used for a paging acceptance response to the first network;
sending the information used for paging rejection to the first network; and
sending the information used for a paging acceptance response to the first network.

41. The information processing apparatus according to claim 40, wherein the apparatus further comprises:
a third sending unit, configured to send third information; and
the third execution unit is configured to perform the third operation according to the third information.

42. The information processing apparatus according to claim 41, wherein the third information comprises at least one of the following:
sixth indication information, wherein the sixth indication information performs paging rejection on the paging message;
seventh indication information, wherein the seventh indication information is used to indicate one of the following: performing a paging acceptance response for the paging message, initiating connection establishment, and initiating connection recovery; and
first tendency information, wherein
the first tendency information comprises at least one of the following:
information used to indicate to reject all paging;
information about a first data channel, wherein the information about the first data channel is used to indicate to reject paging related to the first data channel;
information used to indicate to reject paging except that a paging cause is a first value;
information used to indicate to accept only paging except that a paging cause is a first value;
information used to indicate to accept all paging;
information used to indicate to accept paging whose paging cause is a first value; and
information about a second data channel, wherein the information about the second data channel is used to indicate to accept paging related to the second data channel.

43. The information processing apparatus according to claim 40, wherein the information used for paging rejection comprises one of the following: reject paging indication information and release indication information.

44. An information processing apparatus, comprising:
a third receiving unit, configured to receive a paging message from a first network; and
a fourth execution unit, configured to perform a fourth operation based on the paging message, wherein the fourth operation comprises at least one of the following:
determining whether to perform paging rejection;
determining whether to perform a paging acceptance response;
determining whether to initiate paging rejection through AS signaling;
determining whether to initiate paging rejection through NAS signaling;
sending, through AS signaling, information used for paging rejection or sending, through NAS signaling, information used for paging rejection; and
sending, through AS signaling, information used for a paging acceptance response or sending, through NAS signaling, information used for a paging acceptance response.

45. The information processing apparatus according to claim 44, further comprising:
a first obtaining unit, configured to obtain first tendency information; and
the fourth execution unit is configured to perform the fourth operation according to the first tendency information.

46. The information processing apparatus according to claim 44, wherein the information used for paging rejection comprises one of the following: reject paging indication information and release indication information.

47. A terminal, comprising a processor, a memory, and a program or an instruction that is stored in the memory and that can be run on the processor, wherein the program or the instruction is executed by the processor to implement the steps of the information processing method according to any one of claims 1 to 17, or the steps of the information processing method according to any one of claims 18 to 23, or the steps of the information processing method according to any one of claims 24 to 32.

48. A readable storage medium, wherein a program or an instruction is stored on the readable storage medium, and the program or the instruction is executed by a processor to implement the steps of the information processing method according to any one of claims 1 to 17, or the steps of the information processing method according to any one of claims 18 to 23, or the steps of the information processing method according to any one of claims 24 to 32.
